# EUROPEAN PATENT SPECIFICATION

(11) **EP 4 202 698 B1**
(45) Date of publication and mention of the grant of the patent: **19.08.2026**
(21) Application number: 22207973.3
(22) Date of filing: 17.11.2022
(51) Int. Cl.: G06F 12/1009, G06F 12/14

(54) **CIRCUITRY AND METHODS FOR IMPLEMENTING INPUT/OUTPUT EXTENSIONS FOR TRUST DOMAINS**
SCHALTUNG UND VERFAHREN ZUR IMPLEMENTIERUNG VON EINGABE-/AUSGABEERWEITERUNGEN FÜR VERTRAUENSDOMÄNEN
CIRCUITS ET PROCÉDÉS DE MISE EN UVRE D'EXTENSIONS D'ENTRÉE/SORTIE POUR DES DOMAINES DE CONFIANCE

(30) Priority: 23.12.2021 US 202117560251
(43) Date of publication of application: 28.06.2023
(73) Proprietor: INTEL Corporation, Santa Clara, CA 95054 (US)
(72) Inventor: Basak, Abhishek, Bothell WA, 98012 (US); Shanbhogue, Vedvyas, Austin TX, 78738 (US); Sankaran, Rajesh, Portland OR, 97229 (US); Vakharwala, Rupin, Hillsboro OR 97123 (US); Kakaiya, Utkarsh Y., Folsom CA, 95630 (US); Geisler, Eric, Hillsboro OR 97124 (US); Sahita, Ravi, Portland OR 97229 (US)
(74) Representative: Samson & Partner Patentanwälte mbB

(56) References cited:
- US-A1- 2008 148 048
- US-A1- 2010 161 847
- US-A1- 2019 042 463
- US-A1- 2019 138 755
- US-A1- 2019 228 145

## Description

### TECHNICAL FIELD

The disclosure relates generally to electronics, and, more specifically, an example of the disclosure relates to circuitry for implementing input/output extensions for trust domains.

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (IO). It should be noted that the term instruction herein may refer to a macro-instruction, e.g., an instruction that is provided to the processor for execution, or to a micro-instruction, e.g., an instruction that results from a processor's decoder decoding macro-instructions. US 2019/042463 A1 discloses secure memory access in trust domains using SEPT tables and TDX, focusing on preventing VMM-initiated remapping attacks.

### BRIEF DESCRIPTION OF THE DRAWINGS

The present disclosure is illustrated by way of example and not limitation in the figures of the accompanying drawings, in which like references indicate similar elements and in which:
**Figure 1** illustrates a block diagram of a computer system including a plurality of cores having a trust domain manager, a memory, an input/output memory management unit (IOMMU), and an input/output (IO) device according to examples of the disclosure.
**Figure 2** illustrates a block diagram of a host coupled to an IO device according to examples of the disclosure.
**Figure 3A** illustrates a block diagram of an IOMMU having an IO translation lookaside buffer (IO TLB) according to examples of the disclosure.
**Figure 3B** illustrates a block diagram of translation tables and trusted translation tables for the IOMMU of Figure 3B according to examples of the disclosure.
**Figure 4** illustrates a block diagram of a non-coherent to coherent bridge including an IOMMU according to examples of the disclosure.
**Figure 5** is a table of IOMMU registers according to examples of the disclosure.
**Figure 6** is an example format of a trusted root table address register according to examples of the disclosure.
**Figure 7** is an example format of a trusted invalidation queue head register according to examples of the disclosure.
**Figure 8** is an example format of a trusted invalidation queue tail register according to examples of the disclosure.
**Figure 9** is an example format of a trusted invalidation queue address register according to examples of the disclosure.
**Figure 10** is an example format of a trust domain (e.g., trust domain extensions (TDX)) mode register according to examples of the disclosure.
**Figure 11** is an example format of an extended capability register having trust domain IO capability enumeration according to examples of the disclosure.
**Figure 12** is an example format of an enhanced command status register according to examples of the disclosure.
**Figure 13** is an example format of an enhanced command capability register according to examples of the disclosure.
**Figure 14** is an example format of an enhanced command register according to examples of the disclosure.
**Figure 15** is an example format of an enhanced command response register according to examples of the disclosure.
**Figure 16** is an example format of a processing set trust domain (e.g., trust domain extensions (TDX)) mode bit according to examples of the disclosure.
**Figure 17** is an example format of an example error report according to examples of the disclosure.
**Figure 18** is an example format of an example error report according to examples of the disclosure.
**Figure 19** is an example format of an example error report for a fault during a first level page table (FLPT) walk according to examples of the disclosure.
**Figure 20** is an example format of an example error report for fault during a second level page table (SLPT) walk according to examples of the disclosure.
**Figure 21** is a table of translation structures according to examples of the disclosure.
**Figure 22** is a flow diagram illustrating operations of a method for processing a request for a direct memory access of a protected memory of a trust domain from an input/output device according to examples of the disclosure.
**Figure 23A** is a block diagram illustrating a generic vector friendly instruction format and class A instruction templates thereof according to examples of the disclosure.
**Figure 23B** is a block diagram illustrating the generic vector friendly instruction format and class B instruction templates thereof according to examples of the disclosure.
**Figure 24A** is a block diagram illustrating fields for the generic vector friendly instruction formats in Figures 23A and 23B according to examples of the disclosure.
**Figure 24B** is a block diagram illustrating the fields of the specific vector friendly instruction format in Figure 24A that make up a full opcode field according to one example of the disclosure.
**Figure 24C** is a block diagram illustrating the fields of the specific vector friendly instruction format in Figure 24A that make up a register index field according to one example of the disclosure.
**Figure 24D** is a block diagram illustrating the fields of the specific vector friendly instruction format in Figure 24A that make up the augmentation operation field 2350 according to one example of the disclosure.
**Figure 25** is a block diagram of a register architecture according to one example of the disclosure
**Figure 26A** is a block diagram illustrating both an exemplary in-order pipeline and an exemplary register renaming, out-of-order issue/execution pipeline according to examples of the disclosure.
**Figure 26B** is a block diagram illustrating both an exemplary example of an in-order architecture core and an exemplary register renaming, out-of-order issue/execution architecture core to be included in a processor according to examples of the disclosure.
**Figure 27A** is a block diagram of a single processor core, along with its connection to the on-die interconnect network and with its local subset of the Level 2 (L2) cache, according to examples of the disclosure.
**Figure 27B** is an expanded view of part of the processor core in Figure 27A according to examples of the disclosure.
**Figure 28** is a block diagram of a processor that may have more than one core, may have an integrated memory controller, and may have integrated graphics according to examples of the disclosure.
**Figure 29** is a block diagram of a system in accordance with one example of the present disclosure.
**Figure 30** is a block diagram of a more specific exemplary system in accordance with an example of the present disclosure.
**Figure 31****,** shown is a block diagram of a second more specific exemplary system in accordance with an example of the present disclosure.
**Figure 32****,** shown is a block diagram of a system on a chip (SoC) in accordance with an example of the present disclosure.
**Figure 33** is a block diagram contrasting the use of a software instruction converter to convert binary instructions in a source instruction set to binary instructions in a target instruction set according to examples of the disclosure.

### DETAILED DESCRIPTION

In the following description, numerous specific details are set forth. However, it is understood that examples of the disclosure may be practiced without these specific details. In other instances, well-known circuits, structures, and techniques have not been shown in detail in order not to obscure the understanding of this description.

References in the specification to "one example," "an example," "examples," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

A (e.g., hardware) processor (e.g., having one or more cores) may execute instructions (e.g., a thread of instructions) to operate on data, for example, to perform arithmetic, logic, or other functions. For example, software may request an operation and a hardware processor (e.g., a core or cores thereof) may perform the operation in response to the request. Certain operations include accessing one or more memory locations, e.g., to store and/or read (e.g., load) data. A system may include a plurality of cores, e.g., with a proper subset of cores in each socket of a plurality of sockets, e.g., of a system-on-a-chip (SoC). Each core (e.g., each processor or each socket) may access data storage (e.g., a memory). Memory may include volatile memory (e.g., dynamic random-access memory (DRAM)) or (e.g., byte-addressable) persistent (e.g., non-volatile) memory (e.g., non-volatile RAM) (e.g., separate from any system storage, such as, but not limited, separate from a hard disk drive). One example of persistent memory is a dual in-line memory module (DIMM) (e.g., a non-volatile DIMM) (e.g., an Intel^{®} Optane^{™} memory), for example, accessible according to a Peripheral Component Interconnect Express (PCIe) standard.

In certain examples of computing, a virtual machine (VM) (e.g., guest) is an emulation of a computer system. In certain examples, VMs are based on a specific computer architecture and provide the functionality of an underlying physical computer system. Their implementations may involve specialized hardware, firmware, software, or a combination. In certain examples, a virtual machine monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM may manage the backend operation of these VMs by allocating the necessary computing, memory, storage, and other input/output (IO) resources, such as, but not limited to, an input/output memory management unit (IOMMU) (e.g., an IOMMU circuit). The VMM may provide a centralized interface for managing the entire operation, status, and availability of VMs that are installed over a single host machine or spread across different and interconnected hosts.

However, it may be desirable to maintain the security (e.g., confidentiality) of information for a virtual machine from the VMM and/or other virtual machine(s). Certain processors (e.g., a system-on-a-chip (SoC) including a processor) utilize their hardware to isolate virtual machines, for example, with each referred to as a "trust domain". Certain processors support an instruction set architecture (ISA) (e.g., ISA extension) to implement trust domains. For example, Intel^{®} trust domain extensions (Intel^{®} TDX) that utilize architectural elements to deploy hardware-isolated virtual machines (VMs) referred to as trust domains (TDs).

In certain examples, a hardware processor and its ISA (e.g., a trust domain manager thereof) isolates TD VMs from the VMM (e.g., hypervisor) and/or other non-TD software (e.g., on the host platform). In certain examples, a hardware processor and its ISA (e.g., a trust domain manager thereof) implement trust domains to enhance confidential computing by helping protect the trust domains from a broad range of software attacks and reducing the trust domain's trusted computing base (TCB). In certain examples, a hardware processor and its ISA (e.g., a trust domain manager thereof) enhance a cloud tenant's control of data security and protection. In certain examples, a hardware processor and its ISA (e.g., a trust domain manager thereof) implement trust domains (e.g., trusted virtual machines) to enhance a cloud-service provider's (CSP) ability to provide managed cloud services without exposing tenant data to adversaries.

In certain examples, a hardware processor and its ISA (e.g., a trust domain manager thereof) also support device input/output (IO). For example, with an ISA (e.g., Intel^{®} TDX 2.0) supporting trust domain extension (TDX) with device input/output (IO) (e.g., TDX-IO). In certain examples, a hardware processor and its ISA (e.g., a trust domain manager thereof) that support device input/output (IO) (e.g., TDX-IO) enables the use (e.g., assignment) of a physical function (PF) and/or a virtual function (VF) of a device to (e.g., only) a specific TD.

Certain trust domains (TDs) are used to host confidential computing workloads isolated from hosting environments. Certain trust domain technology (e.g., TDX 1.0) architecture enables isolation of the TD (e.g., central processing unit (CPU)) context and memory from the hosting environment, but does not support trusted IO (e.g., direct memory access (DMA) or memory-mapped I/O (MMIO)) to TD private memory, e.g., leading to higher overheads as trust domains are to use a software mechanism for protecting data sent to IO devices (e.g., storage, network, etc.), for example, where all IO data is sent through bounce buffers in TD shared memory using para-virtualized interfaces. However, in certain examples, this precludes the use of some IO models, such as, but not limited to, scalable IO virtualization (IOV), shared virtual memory, direct IO assignments, and compute offload to an accelerator, field-programmable gate array (FPGA), and/or graphics processing unit (GPU). Thus, from an IO perspective, certain trust domain technology (e.g., TDX 1.0) suffers from the limitations of 1) functionality (e.g., security) because protection can only be extended for devices having the capabilities of end to end encryption (e.g., hardware (H/W) or software (S/W) stack based), as well as no support for state of the art IO virtualization/programming models, and 2) performance because copying for bounce buffers (and software based encryption) incurs significant performance overheads, especially with increased speed/bandwidth of IO devices (e.g., accelerators).

Certain trust domain technology (for example, trust domain extensions (TDX) with device input/output (IO) (e.g., TDX-IO)) defines the hardware, firmware, and/or software extensions to enable direct and trusted IO between TDs and corresponding IO (e.g., TDX-IO) enlightened devices, and thus overcomes the above limitations. In certain examples, an IOMMU (e.g., a VT-d engine thereof) on a system-on-a-chip (SoC) is the critical hardware enabling trusted direct memory access (trusted DMA) between these device(s) (e.g., in TD's trusted computing base (TCB)) and one or more TD's private memory, and overcomes the above limitations.

Certain examples herein are directed to VT-d/IOMMU extensions for enabling TDX-IO. Certain examples herein are directed to TDX-IO IOMMU (e.g., virtualization technology for directed I/O (VT-d)) extensions to a processor and/or its ISA. Certain examples herein extend an IOMMU (e.g., circuitry) with (i) new security attributes of initiator (SAI) protected (e.g., access controlled to only trusted firmware or TDX Module and/or SEAM) architectural register set, (ii) trusted root table pointer for enabling trusted DMA walks to TD private memory from device(s) in TD's TCB (e.g., a TD assigned device), a trusted invalidation queue (e.g., and register(s) for its base address, head, and tail) for enabling trusted invalidations and thereby secure page and/or IO resource reassignment, and/or (iii) a control (e.g., TDX_MODE) register for securely transitioning IOMMU in and out of trust domain (e.g., tdx_mode) operation. In certain examples, a bit (e.g., a trusted "ide_t" bit in an incoming Peripheral Component Interconnect Express (PCIe) standard's integrity and data encryption (IDE) transaction layer packet (TLP) prefix) in a memory access request (e.g., a request by an IO device to a private memory of a trust domain) (i) signifies whether a DMA request (e.g., transaction) originates from a trusted IO context, and/or (ii) is used to select between walking the untrusted (e.g., VMM) maintained (e.g., VT-d) translation tables (e.g., from root pointer) or the trusted (e.g., TDM) (e.g., TDX Module) maintained (e.g., VT-d) translation tables (e.g., from trusted root pointer). In certain examples, a translation table includes a mapping of a virtual address to a physical address.

In certain examples, a VMM is not trusted to access "trusted" translation table(s) for a trust domain or a plurality of trust domains (e.g., not trusted with the mappings of a (e.g., guest) trust domain (e.g., physical) address to a host (e.g., physical) address), and a trust domain manager is to instead manage the translation tables for the trust domain or the plurality of trust domains. In certain examples, an IOMMU is to restrict access to the "trusted" translation tables, for example, to ensure that only trusted access(es) by an IO device is allowed, e.g., to ensure that the IO device is in the trusted computing base of the trust domain (or the plurality of trust domains).

In certain examples, an IOMMU includes a translation lookaside buffer (IOTLB) to perform a walk, etc. In certain examples, an IOTLB and/or respective IOMMU (e.g., invalidation) caches are tagged to separate between trusted and untrusted (e.g., VT-d) mappings. In certain examples, for different transactions to memory (e.g., originating from the I/O device or the IOMMU itself), the IOMMU generates a command which is used to selectively allow addresses to TD private memory, e.g., where this catches various security threats from untrusted VMM/operating system(OS) VT-d tables/IOMMU programming and/or malicious devices.

In certain examples, the IOMMU enhancements enable TDX-IO, and thus are improvements to the functioning of a SoC (e.g., processor) (e.g., of a computer) itself as they allow for confidential computing in the cloud space (e.g., with (e.g., all) direct, performant IO models supported as well), particular with the rise of heterogeneous computing with accelerators and IO devices in the cloud.

In certain examples, IOMMU enhancements include one or more of: an access controlled register set in corresponding IOMMU, two (e.g., "trusted" and "untrusted") root pointers, two (e.g., "trusted" and "untrusted") invalidation queues, "trusted" tags in the IOMMU caches (e.g., translation table cache(s)), and/or new faults for trusted/untrusted DMA walks. In certain examples, these are architectural changes and are also documented in a corresponding IOMMU specification. In certain examples, these architectural changes can be seen by monitoring a DMA path of trusted transactions to and/or from system memory.

It should be understood that the functionality herein may be added to other confidential computing technology as a computing solution for IO devices, for example, to AMD^{®} Secure Encrypted Virtualization (e.g., SEV/SEV-ES/SEV-SNP) or ARM^{®} Realm Management Extension (RME).

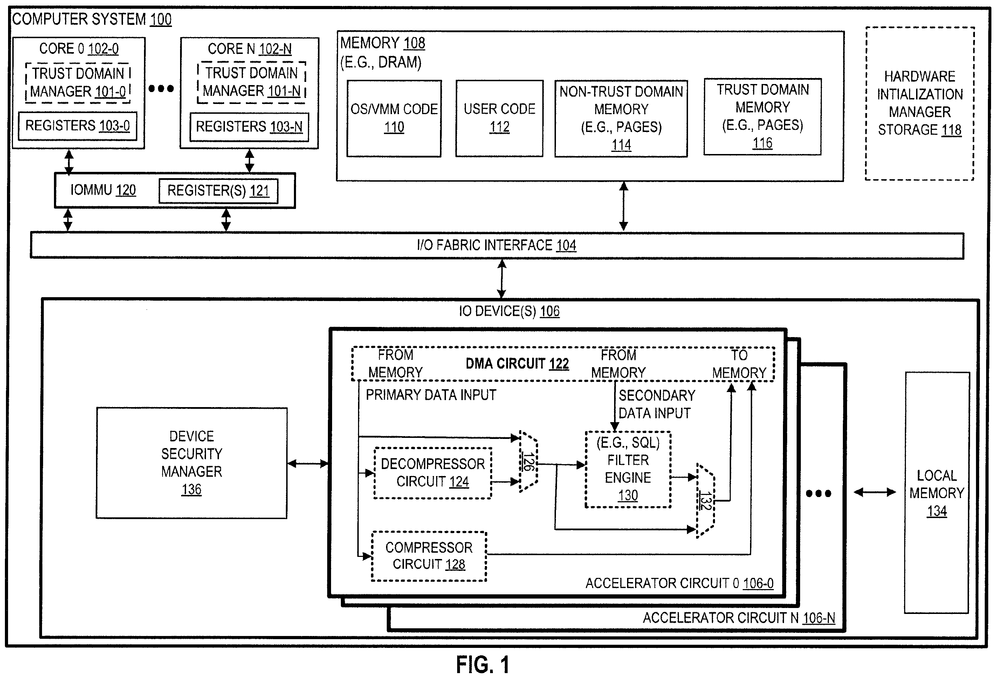

Turning now to Figure 1, an example system architecture is depicted. **Figure 1** illustrates a block diagram of a computer system 100 including 102-0 to 102-N (e.g., where N is any positive integer greater than one, although single core examples may also be utilized) having a trust domain manager 101-0 to 101-N, a memory 108 (e.g., a system memory separate from a processor and/or core memory), an input/output memory management unit (IOMMU) 120 (e.g., circuit), and an input/output (IO) device 106 according to examples of the disclosure.

In certain examples, each core includes (e.g., or logical includes) a set of registers, e.g., registers 103-0 for core 102-0, registers 103-N for core 102-N, etc. Registers 103 may be data registers and/or control registers, e.g., for each core (e.g., or each logical core of a plurality of logical cores of a physical core).

In certain examples, IO device 106 includes one or more accelerators (e.g., accelerator circuits 106-0 to 106-N (e.g., where N is any positive integer greater than one, although single accelerator circuit examples may also be utilized)).

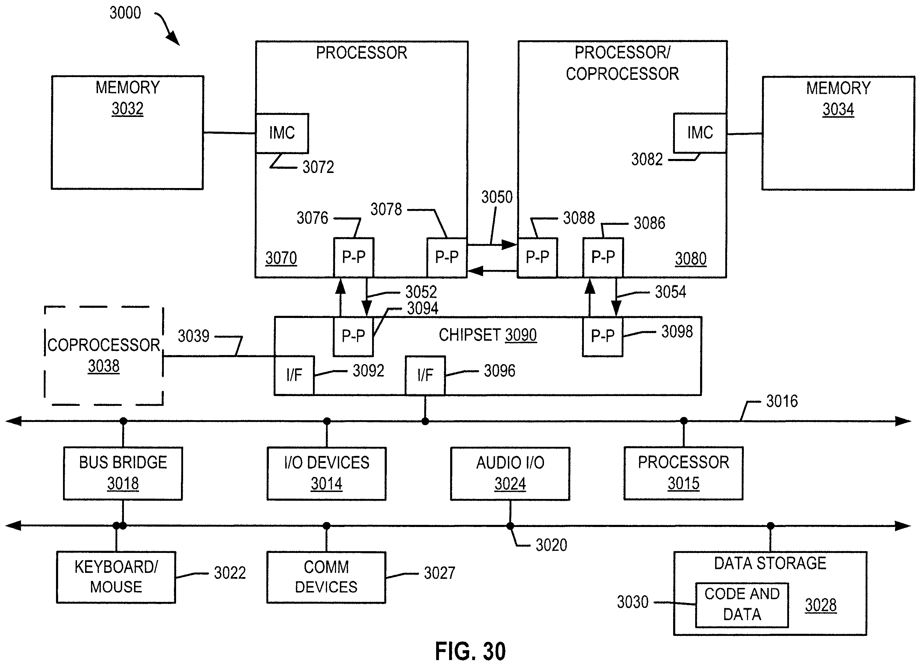

Although the example shown in Figure 1 of the device 106 is an accelerator, it should be understood that other devices (e.g., non-accelerator devices) can utilized the examples disclosed herein. In the depicted example, a (e.g., each) accelerator circuit 106-0 to 106-N includes a decompressor circuit 124 to perform decompression operations, a compressor circuit 128 to perform compression operations, and a direct memory access (DMA) circuit 122, e.g., to connect to memory 108 and/or internal memory (e.g., cache) of a core. In one example, compressor circuit 128 is (e.g., dynamically) shared by two or more of the accelerator circuits 106-0 to 106-N. In certain examples, the data for a job that is assigned to a particular accelerator circuit (e.g., accelerator circuit 106-0) is streamed in by DMA circuit 122, for example, as primary and/or secondary input. Multiplexers 126 and 132 may be utilized to route data for a particular operation. Optionally, a (e.g., Structured Query Language (SQL)) filter engine 130 may be included, for example, to perform a filtering query (e.g., for a search term input on the secondary data input) on input data, e.g., on decompressed data output from decompressor circuit 124. Device 106 may include a local memory 134, e.g., shared by a plurality of accelerator circuits 106-0 to 106-N. Computer system 100 may couple to a hard drive, e.g., storage unit 3028 in Figure 30.

Memory 108 may include operating system (OS) and/or virtual machine monitor code 110, user (e.g., program) code 112, non-trust domain memory 114 (e.g., pages), trust domain memory 116 (e.g., pages), uncompressed data (e.g., pages), compressed data (e.g., pages), or any combination thereof. In certain examples of computing, a virtual machine (VM) is an emulation of a computer system. In certain examples, VMs are based on a specific computer architecture and provide the functionality of an underlying physical computer system. Their implementations may involve specialized hardware, firmware, software, or a combination. In certain examples, the virtual machine monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM may manage the backend operation of these VMs by allocating the necessary computing, memory, storage, and other input/output (IO) resources, such as, but not limited to, an input/output memory management unit (IOMMU). The VMM may provide a centralized interface for managing the entire operation, status, and availability of VMs that are installed over a single host machine or spread across different and interconnected hosts.

Memory 108 may be memory separate from a core and/or device 106. Memory 108 may be DRAM. Compressed data may be stored in a first memory device (e.g., far memory) and/or uncompressed data may be stored in a separate, second memory device (e.g., as near memory).

A coupling (e.g., input/output (IO) fabric interface 104) may be included to allow communication between device 106, core(s) 102-0 to 102-N, memory 108, etc.

In certain examples, the hardware initialization manager (non-transitory) storage 118 stores hardware initialization manager firmware (e.g., or software). In one example, the hardware initialization manager (non-transitory) storage 118 stores Basic Input/Output System (BIOS) firmware. In another example, the hardware initialization manager (non-transitory) storage 118 stores Unified Extensible Firmware Interface (UEFI) firmware. In certain examples (e.g., triggered by the power-on or reboot of a processor), computer system 100 (e.g., core 102-0) executes the hardware initialization manager firmware (e.g., or software) stored in hardware initialization manager (non-transitory) storage 118 to initialize the system 100 for operation, for example, to begin executing an operating system (OS) and/or initialize and test the (e.g., hardware) components of system 100.

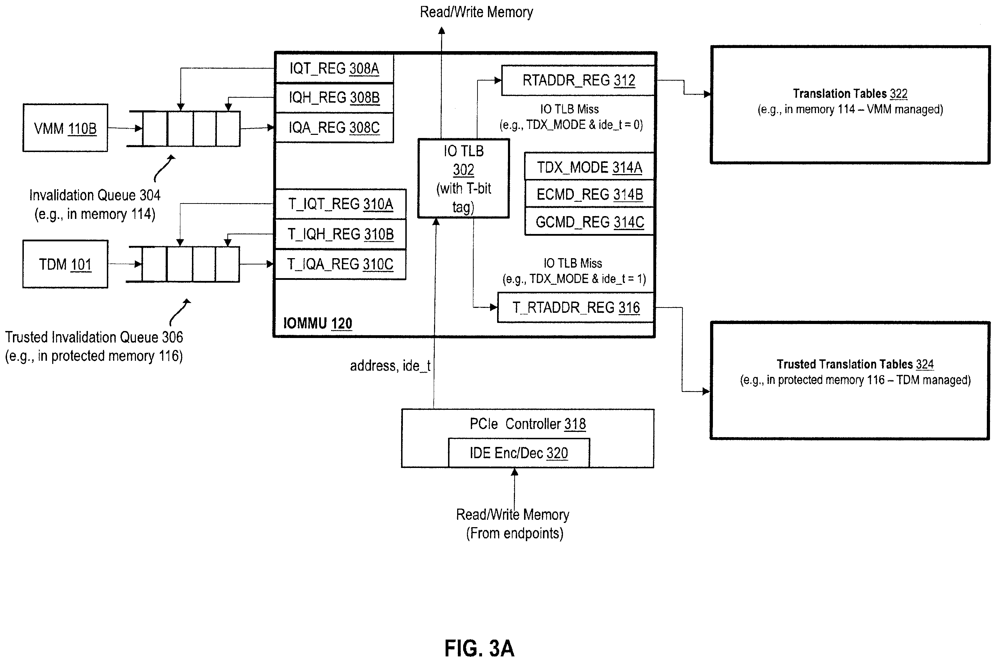

In certain examples, computer system 100 includes an input/output memory management unit (IOMMU) 120 (e.g., circuitry), e.g., coupled between one or more cores 102-0 to 102-N and IO fabric interface 104. In certain examples, IO fabric interface is a Peripheral Component Interface Express (PCIe) interface or a Compute Express Link (CXL) interface. In certain examples, IOMMU 120 provides address translation, for example, from a virtual address to a physical address. In certain examples, IOMMU 120 includes one or more registers 121, for example, data registers and/or control registers (e.g., the registers discussed in reference to Figures 3A-10). Example formats for certain registers are discussed below.

A device 106 may include any of the depicted components. For example, with one or more instances of an accelerator circuit 106-0 to 106-N. In certain examples, a job (e.g., corresponding descriptor for that job) is submitted to the device 106 and the device to performs one or more (e.g., decompression or compression) operations. In certain examples, device 106 includes a local memory 134. In certain examples, device 106 is a TEE IO capable device, for example, with the host (e.g., processor including one of more of cores 102-0 to 102-N) being a TEE capable host. In certain examples, a TEE capable host implements a TEE security manager.

In certain examples, a trusted execution environment (TEE) security manager (e.g., implemented by a trust domain manager 101) is to: provide interfaces to the VMM to assign memory, processor, and other resources to trust domains (e.g., trusted virtual machines), (ii) implements the security mechanisms and access controls (e.g., IOMMU translation tables, etc.) to protect confidentiality and integrity of the trust domains (e.g., trusted virtual machines) data and execution state in the host from entities not in the trusted computing base of the trust domains (e.g., trusted virtual machines), (iii) uses a protocol to manage the security state of the trusted device interface (TDI) to be used by the trust domains (e.g., trusted virtual machines), (iv) establishing/managing IDE encryption keys for the host, and, if needed, scheduling key refreshes. TSM programs the IDE encryption keys into the host root ports and communicates with the DSM to configure integrity and data encryption (IDE) encryption keys in the device, (v) or any single or combination thereof.

In certain examples, a device security manager (DSM) 136 is to (i) support authentication of device identities and measurement reporting, (ii) configuring the IDE encryption keys in the device (e.g., where the TSM provide the keys for the initial configuration and subsequent key refreshes to the DSM), (iii) provide device interface management for locking TDI configuration, reporting TDI configurations, attaching, and detaching TDIs to trust domains (e.g., trusted virtual machines), (iv) implements access control and security mechanisms to isolate trust domain (e.g., trusted virtual machine) provided data from entities not in the TCB of a trust domain (e.g., a trusted virtual machine), (v) or any single or combination thereof.

In certain examples, a standard defines a virtual machine monitor (VMM) (e.g., or VM thereof), TSM (e.g., trust domain manager 101), and device security manager (DSM) 136 interaction flow.

In certain examples, IOMMU 120 and trust domain manager(s) 101 cooperate to allow for direct memory access (e.g., directly) between (e.g., to and/or from) IO device(s) 106 and trust domain memory 116 (e.g., a region for only a single trust domain and/or another region shared by a plurality of trust domains).

In order to establish the trust relationship between a device and a TD, certain TDX-IO architectures require the TD and/or a trust domain manager (e.g., circuit and/or code) (e.g., Trusted Execution Environment (TEE) security manager (TSM)) to create a secure communication session between the device and the trust domain manger (e.g., for the trust domain manger to allow a particular trust domain to use the device or a subset of function(s) of the device). In order to establish the trust relationship between a device and a TD, certain TDX-IO architectures require the TD and/or a trust domain manager (e.g., circuit and/or code) (e.g., Trusted Execution Environment (TEE) security manager (TSM)) use (i) a Distributed Management Task Force (DMTF) Secure Protocol and Data Model (SPDM) standard to authenticate the device (e.g., and collect device measurement), and (ii) use a Peripheral Component Interconnect Special Interest Group (PCI-SIG) Trusted Device Interface Security Protocol (TDISP) standard (e.g., to communicate with a device security manager (DSM) to manage the device's function(s)).

In certain examples, a SPDM messaging protocol defines a request-response messaging model between two endpoints to perform the message exchanges outlined in SPDM message exchanges, for example, where each SPDM request message shall be responded to with an SPDM response message as defined in the SPDM specification. In certain examples, an endpoint's (e.g., device's) "measurement" describes the process of calculating the cryptographic hash value of a piece of firmware/software or configuration data and tying the cryptographic hash value with the endpoint identity through the use of digital signatures. This allows an authentication initiator to establish that the identity and measurement of the firmware/software or configuration running on the endpoint.

In certain examples, to help enforce the security policies for the TDs, a new mode of a processor called Secure-Arbitration Mode (SEAM) is introduced to host an (e.g., manufacturer provided) digitally signed, but not encrypted, security-services module. In certain examples, a trust domain manager (TDM) 101 is hosted in a reserved, memory space identified by a SEAM-range register (SEAMRR). In certain examples, the processor only allows access to SEAM-memory range to software executing inside the SEAM-memory range, and all other software accesses and direct-memory access (DMA) from devices to this memory range are aborted. In certain examples, a SEAM module does not have any memory-access privileges to other protected, memory regions in the platform, including the System-Management Mode (SMM) memory or (e.g., Intel^{®} Software Guard Extensions (SGX)) protected memory.

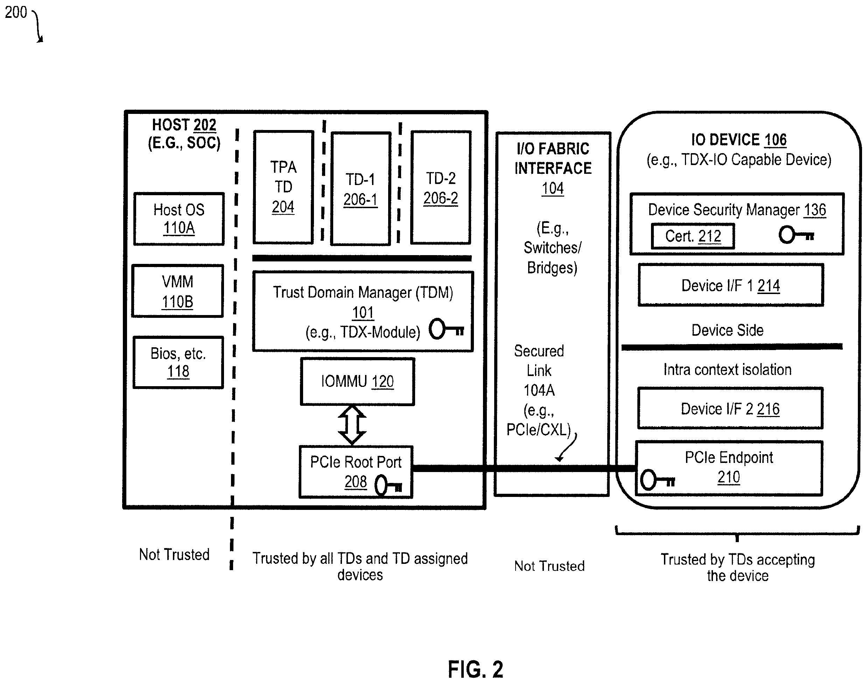

**Figure** 2 illustrates a block diagram of a host 202 (e.g., one or more of processor cores 102 in Figure 1) coupled to an IO device 106 (e.g., TDX-IO capable device) according to examples of the disclosure (e.g., forming a system 200). In certain examples, host 202 implements TDX-IO provisioning agent (TPA) 204 of trust domains, and a plurality of trust domains, shown as trust domain "1" 206-1 and trust domain "2" 206-2, although any single or plurality of trust domains may be implemented. In certain examples, host 202 includes a trust domain manager 101 to manage the trust domains (for example, with the vertical dashed lines indicating isolation therebetween the trust domains, e.g., and host OS 110A, VMM 110B, and BIOS, etc. 118). In certain examples, the virtual machine monitor 110B manages (e.g., generates) one or more virtual machines, e.g., with the trust domain manager 101 isolating a first virtual machine as a first trust domain from a second (or more) virtual machine and second (or more) trust domain(s). In certain examples, the host 202 includes a (e.g., PCIe) root port 208 having a key (shown symbolically) to allow secure communications with the IO device 106, e.g., with the (e.g., PCIe) endpoint 210 thereof (e.g., also having the key (shown symbolically)). In certain examples, the trust domain manager 101 and device security manager 136 are also to have a key, e.g., representing a memory protection key and a secure session key respectively.

In certain examples, the host 202 is coupled to device 216 via a coupling 104, e.g., via a secured link 104A (e.g., a link according to a PCIe/Compute Express Link (CXL) standard).

In certain examples, the host 202 is coupled to device 216 according to a transport level (e.g., SPDM) specification and/or an application level (e.g., TDISP) specification. In certain examples, device 106 includes a device security manager (DSM) 136 with a device secret(s), e.g., device certificate 212, session key, device "measurement" values, etc. In certain examples, device 106 implements one or more physical function(s).

In certain examples, device 106 includes a first device interface (I/F) 214 on the device side, and one or more second device interface(s) 216. In certain examples, the device 106 supports intra context isolation between these interfaces.

In certain examples, device 106 (e.g., according to a single-root input/output virtualization (SR-IOV) standard) is shared by a plurality of virtual machines (e.g., trust domains). In certain examples, a physical function has the ability to move data in and out of the device while virtual functions (for example, first virtual function and second virtual function, e.g., where the virtual functions are lightweight (e.g., PCI express (PCIe)) functions that support data flowing but also have a restricted set of configuration resources.

In certain examples, IO device 106 is to perform a direct memory access request to a private memory of a trust domain (e.g., trust domain 206-1 or trust domain 206-2) under the control of the IOMMU 120.

In certain examples, a trust domain has both a private memory (e.g., in trust domain memory 116 in Figure 1) and a shared memory (e.g., in non-trust domain memory 114 and/or trust domain memory 116 in Figure 1). In certain examples, DMAs target protected memory (e.g., private memory and shared memory of a trust domain).

Example extensions and changes to the IOMMU 120 with respect to different architectural components are discussed below.

Figure 3A illustrates a block diagram of an IOMMU 120 having an IO translation lookaside buffer 302 (IO TLB) according to examples of the disclosure. Depicted IO TLB 302 includes an input for a memory access (e.g., read and/or write) request (e.g., from an IO device 106), for example, from PCIe controller 318 (e.g., including an IDE encoder/decoder 320).

In certain examples, IO TLB 302 is to, for a hit in the IO TLB (e.g., its cache of mappings) for an input of an (e.g., virtual) address from the device (e.g., endpoint), output the corresponding host (e.g., physical) address, and/or for a miss in the IO TLB (e.g., its cache of mappings) for an input of a (e.g., virtual) address, perform a (e.g., page) walk in memory to determine the corresponding host (e.g., physical) address for that input of address from the device.

However, it may be desirable to not allow an IO device 106 to access protected private memory (e.g., trust domain memory 116 in Figure 1 and/or any data structure (e.g., mappings and/or translation tables for an IOTLB), register, etc. that has corresponding data for that private memory) unless that request is from (or for) a trusted computing base of the corresponding trust domain. In certain examples, it is desirable to keep a VMM 110B (or OS or other component that is not part of a trust domain) from accessing the private memory as well as any data structure (e.g., mappings and/or translation tables for an IOTLB), register, etc. that has corresponding data for that private memory (e.g., trust domain memory 116 in Figure 1).

In certain examples, a request for protected private memory (e.g., marked with "ide_t" (e.g., =1) as discussed herein) is to be sent to a set of trusted translation tables 324 (e.g., also stored within protected memory 116 or within IOMMU 120) (e.g., managed by the trust domain manager 101 (e.g., TDX-module)) that are separate from a set of "non-trusted" translation tables 322 (e.g., in non-trust domain memory 114 or within IOMMU 120) (e.g., managed by the VMM 110B). In certain examples, IOMMU 120 maintains a (e.g., trusted) translation table for each device.

In certain examples, use of separate "non-trusted" translation tables 322 and trusted translation tables 324 means that a separate set of one or more registers is to be utilized for each, for example, with "non-trusted" root table address register 312 storing the pointer for the base address of the non-trusted root table in "non-trusted" translation tables 322 and trusted root table address register (T_RTADDR_REG) 316 storing the pointer for the base address of the trusted root table in trusted translation tables 324 (e.g., where a root table stores a plurality of root entries and each root entry contains a context table pointer to reference the context table for the IO device).

In certain examples, a request for non-private memory (e.g., not marked with "ide_t" (e.g., =0) as discussed herein) is to be sent to a set of non-private translation tables 322 (e.g., stored in non-trust domain memory 114).

In certain examples, IOMMU 120 includes a set of registers for an invalidation queue. In certain examples, it is desirable to keep a VMM 110B (or OS or other component that is not part of a trust domain) from invalidating private memory as well as reading any data structure, register, etc. that has corresponding data for invalidating that private memory (e.g., in trust domain memory 116 in Figure 1). In certain examples, IOMMU 120 keeps anything except for a trust domain manager 101 from having access to the trusted IOMMU registers 310A-310C and 316 and trusted translations tables 324.

In certain examples, different trust domains are mapped through one or more corresponding trusted translation tables 324, e.g., and corresponding values for IOMMU registers 310A-310C and/or corresponding IOMMU registers 310A-310C.

In certain examples, a request (e.g., command) for an invalidation of (e.g., a page of) protected private memory 116 as discussed herein) is to be sent (e.g., by the trust domain manager 101 (e.g., TDX-module)) to trusted invalidation queue 306. In certain examples, trusted invalidation queue tail register (T_IQT_REG) 310A (e.g., for TDX-IO) is to store an indication of the tail (e.g., last valid) entry in trusted invalidation queue 306, trusted invalidation queue head register (T_IQH_REG) 310B (e.g., for TDX-IO) is to store an indication of the head (e.g., first valid) entry in trusted invalidation queue 306, and trusted invalidation queue address register (T_IQA_REG) 310C (e.g., for TDX-IO) is to store an indication of the base address (e.g., and size) of the trusted invalidation queue 306, e.g., with these registers accessible (e.g., only) by the trust domain manager 101 and/or these registers within the IOMMU 120.

In certain examples, a request (e.g., command) for an invalidation of (e.g., a page of) non-private memory 114 as discussed herein) is to be sent (e.g., by the virtual machine monitor 110B) to "non-trusted" invalidation queue 304. In certain examples, "non-trusted" invalidation queue tail register (IQT_REG) 308A (e.g., not for TDX-IO) is to store an indication of the tail (e.g., last valid) entry in "non-trusted" invalidation queue 304, "non-trusted" invalidation queue head register (IQH_REG) 308B (e.g., not for TDX-IO) is to store an indication of the head (e.g., first valid) entry in "non-trusted" invalidation queue 304, and "non-trusted" invalidation queue address register (IQA_REG) 310C (e.g., not for TDX-IO) is to store an indication of the base address (e.g., and size) of the "non-trusted" invalidation queue 304, e.g., with these registers accessible (e.g., only) by the VMM 110B and/or these registers within the IOMMU 120.

In certain examples, the invalidation requests are serviced, e.g., and the corresponding register(s) are updated, for example, updating the head and tail pointers accordingly. In certain examples, an invalidation request is (i) to take memory (e.g., a page) from a first virtual machine (e.g., or trust domain) and give it to another virtual machine (e.g., or trust domain) (e.g., after clearing the data of the first virtual machine from that memory), (ii) to delete a virtual machine (e.g., or trust domain), and/or (iii) in response to a global reset request.

In certain examples, registers include a control register (TDX_MODE) 314A (e.g., within IOMMU 120) to set the IOMMU 120 within TDM (e.g., TDX) mode, e.g., to use registers 310A-310C, register 316, and/or trusted tables 324 (e.g., when the "ide_t" or "t-bit tag" is set). In certain examples, registers include a command register (ECMD_REG) 314B (e.g., within IOMMU 120) to send (e.g., and store) a command to the IOMMU 120, e.g., a command to enable/disable the TDX-mode, etc. In certain examples, registers include a global command register (GCMD_REG) 314C (e.g., within IOMMU 120) to store a global command to the IOMMU 120, e.g., a command to perform a global reset (e.g., to clear all the blocks (e.g., pages) in memory).

In certain examples, trust domain manager 101 (e.g., TDX-module) manages trusted IOMMU registers 310A-310C and 316 and trusted translations tables 324.

In certain examples, VMM 110B 101 manages other IOMMU registers 308A-308C and 312 and other translations tables 322.

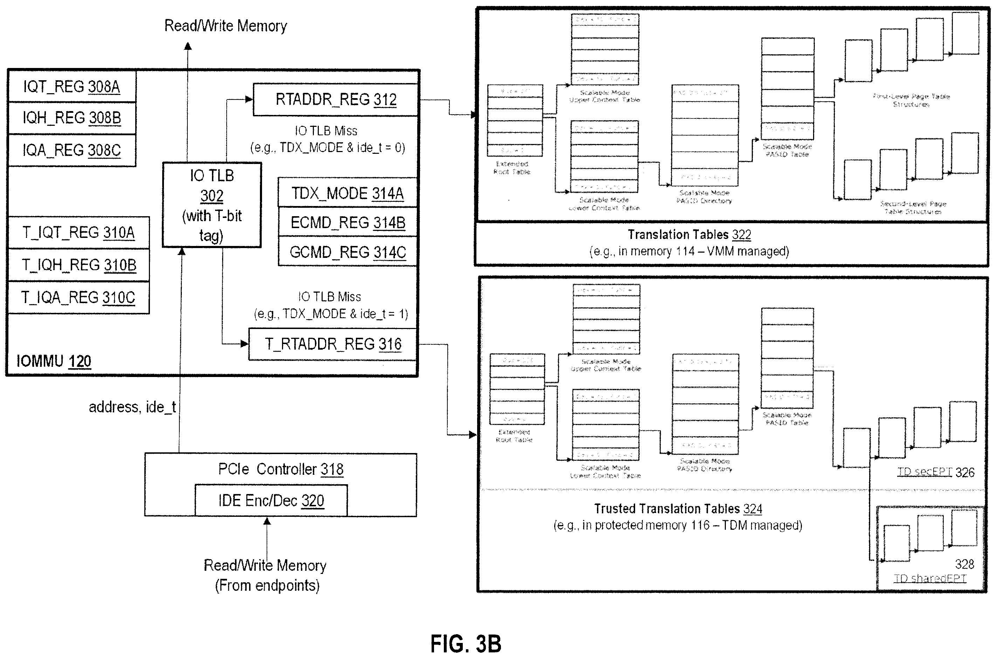

**Figure 3B** illustrates a block diagram of translation tables 322 and trusted translation tables 324 for the IOMMU of Figure 3B according to examples of the disclosure. In certain examples, the hierarchy of performing a page walk is as shown in Figure 3B, e.g., to output a corresponding physical address for an input of a virtual address (e.g., guest physical address for a trust domain). In certain examples, trusted translations tables 324 includes a secure extended page table (secEPT) 326 (for example, per TD key (e.g., TD KeyID)) for a private memory of a trust domain and/or a shared extended page table (sharedEPT) 328 for a protected memory shared (i) between multiple trust domains (e.g., but shared EPT cannot provide TD KeyID) and/or (ii) with the virtual machine monitor 110B.

Certain I/O memory controllers (e.g., IOMMU 120) (e.g., in Scalable Mode as discussed below in reference) allow IO devices to access memory using the virtual address (VA) in the DMA requests (e.g., with or without a process address space identifier (PASID) prefix). In certain examples, I/O memory controller (e.g., IOMMU) translates a VA to a corresponding physical address (PA) using a PASID configured in the translation tables or using a PASID received in the DMA request.

In certain examples, I/O memory controller (e.g., IOMMU 120) pushes a translation into built-in IOTLB (e.g., the data storage therein that stores the virtual address to physical address mappings) after a successful page table walk.
In certain examples, translation tables 322 (e.g., stored in IOMMU 120 and/or IOTLB 302) includes a DMA remapping structure (e.g., that starts with a root table) according to examples of the disclosure. Depicted (scalable) root table includes a bus entry (e.g., 0 to 255) that points to an entry for a device (e.g., function) in (upper or lower scalable) context table that points to a PASID directory whose entry then points to a PASID table whose entry contains a value that includes a first level page table (FLPT) pointer and/or a second level page table (SLPT) pointer.

In certain examples, trusted translation tables 324 (e.g., stored in IOMMU 120 and/or IOTLB 302) includes a DMA remapping structure (e.g., that starts with a root table) according to examples of the disclosure. Depicted (scalable) root table includes a bus entry (e.g., 0 to 255) that points to an entry for a device (e.g., function) in (e.g., lower or upper scalable) context table that points to PASID directory whose entry then points to a PASID table whose entry contains a value that includes a pointer to a secure extended page table (secEPT) 326 (for example, that maps memory protected using a TD key (e.g., TD KeyID)) or a combination of secEPT and a shared extended page table (sharedEPT) 328 (e.g., that maps TD's private and shared memory).

In certain examples, each inbound request appearing at the address-translation hardware (e.g., IOMMU 120) is required to identify the device originating the request. The (e.g., 16 bit) attribute identifying the originator of an I/O transaction may be referred to as the source ID. In certain examples, for PCI Express (PCIe) devices, the source ID is the requester identifier in the PCI Express transaction layer header in certain examples, e.g., where the requester identifier of a device, which is composed of its PCI Bus number /Device number / Function number, is assigned by configuration software, and uniquely identifies the hardware function that initiated the request.

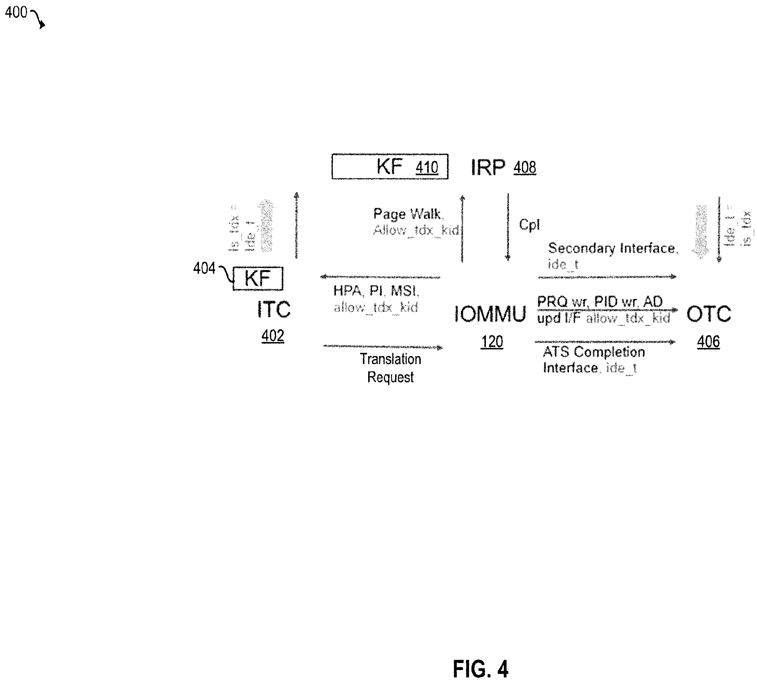

**Figure 4** illustrates a block diagram of a non-coherent to coherent bridge 400 including an IOMMU 120 according to examples of the disclosure. In certain examples, non-coherent to coherent bridge 400 includes an inbound transaction cache (ITC) 402 (e.g., to receive a request from an IO device 106 to access memory), e.g., including a (e.g., Multi-Key Total Memory Encryption (MKTME)) key filter 404. In certain examples, MKTME functionality for a processor (e.g., SoC) allows software to use one or more separate keys for memory encryption, e.g., when used with TDX, it provides confidentiality via separate keys for memory used by each trust domain. In certain examples, non-coherent to coherent bridge 400 includes an inbound request processor (IRP) 408 (e.g., to connect to memory), e.g., to send the request from the IO device 106 to the memory for servicing and/or receive a response (e.g., the mapping) for the request back from memory (e.g., including a (e.g., MKTME) key filter 410). In certain examples, non-coherent to coherent bridge 400 includes an outbound transaction cache (OTC) 406 (e.g., to send the response to the request to the IO device 106).

### INTERFACE LEVEL CHANGES

### Primary Interface

In certain examples, the IOMMU 120 gets a new input (e.g., "ide_t" as the state of the T bit in the IDE prefix of TLP (e.g., not a control packet) received, e.g., where the T bit, when set, indicates the TLP originated from within a trust domain) from devices. In certain examples, for a TLP received without the IDE prefix, this input is 0. In certain examples, the IOMMU 120 generates an output ("allow_tdx_kid") which indicates if the physical address at the final applicable output can have a trust domain (e.g., TDX) KeyID (kid).

### Secondary Interface

In certain examples, to signal the setting of the T bit to be sent in the PCIe TLP, the IOMMU 120 outputs a signal ide_t which is forwarded by the HIOP (e.g., OTC 406 thereof) to the on-chip system fabric (OSF) agent (e.g., IRP 408). In certain examples, the IOMMU 120 sets ide_t to 1 when the message was generated in response to descriptors from the trusted invalidation queue (e.g., trusted invalidation queue 306 in Figure 3A) and sets ide_t to 0 for messages generated in response to descriptors from the "normal" invalidation queue (e.g., invalidation queue 304 in Figure 3A).

In certain examples, the secondary interface is also used to generate Message Signaled Interrupts (MSI) writes, e.g., writes to special memory ranges and the allow_tdx_kid for these writes is assumed to be 0.

In certain examples, the secondary interface is also used to generate writes to store the value obtained "Status Data" field of invalidation wait descriptor to address specified by the "Status Address" field of an invalidation wait descriptor. In certain examples, the allow_tdx_kid for these writes is always 0 irrespective of which invalidation queue (normal or trusted) the invalidation wait descriptor was processed from.

### Memory interface

In certain examples, a new signal (value) called allow_tdx_kid is added to this interface to indicate if the physical address of the access to the memory subsystem can have a TDM (e.g., TDX) KeyID.

In certain examples, the memory interface is used by the IOMMU 120:
(i) for fetches to translation table entries as part of page walk originating from the normal as well as trusted translation tables, (ii) to perform address/data (A/D) bit updates atomically in first and second level paging structures, (iii) to perform atomic updates to the posted interrupt descriptor (PID), (iv) for fetches to invalidation descriptor from the normal as well as trusted invalidation queue, and/or (v) writes to the page request queue.

In certain examples, one or more registers are used to implement the disclosure herein. For example, by decoding and executing an instruction that stores a (e.g., control) value into one or more registers.

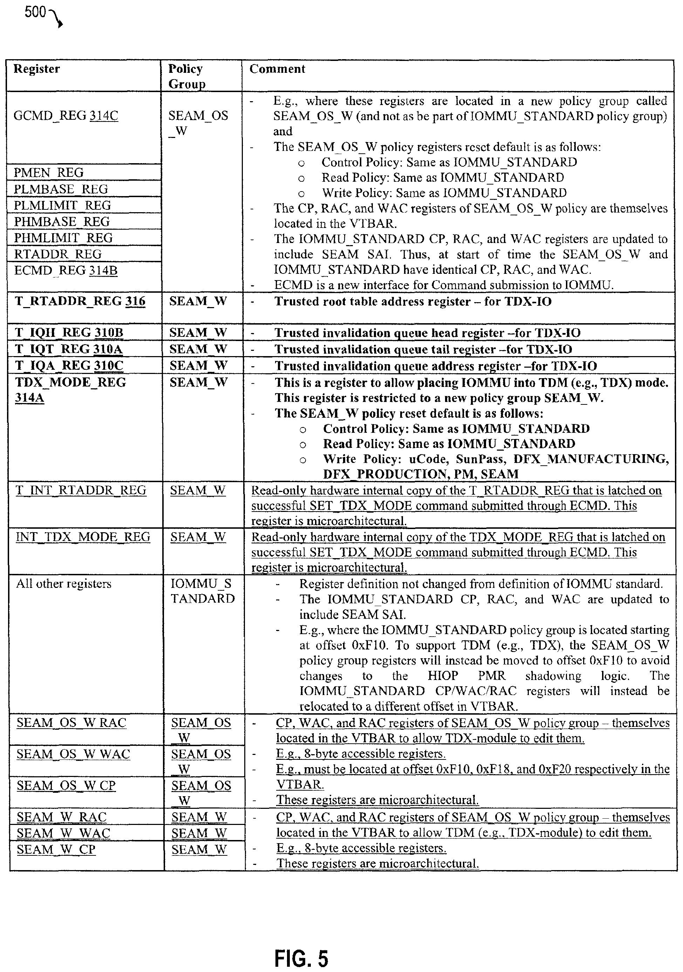

**Figure 5** is a table of IOMMU (e.g., and VT-d) registers 500 according to examples of the disclosure. In Figure 5, certain architectural registers used to implement input/output extensions for trust domains are shown in bold, and micro-architectural level register additions are depicted in underline. In certain examples, register's access policy groups are changed for security, e.g., when in the TDX_MODE of operation. In certain examples, an IOMMU includes a trusted root table address register (T_RTADDR_REG) 316, trusted invalidation queue tail register (T_IQT_REG) 310A (e.g., for TDX-IO), trusted invalidation queue head register (T_IQH_REG) 310B (e.g., for TDX-IO), trusted invalidation queue address register (T_IQA_REG) 310C (e.g., for TDX-IO), a register (TDX_MODE_REG) 314A to set the IOMMU 120 into (or out of) TDM (e.g., TDX) mode, and/or a command register (ECMD_REG) 314B as an interface to submit a command (e.g., to place it into or out of TDX mode) to the IOMMU. In certain examples, a "standard" command, register, etc. refers to a command, register, etc. that is not used for a trust domain, e.g., not used to implement input/output extensions for trust domains.

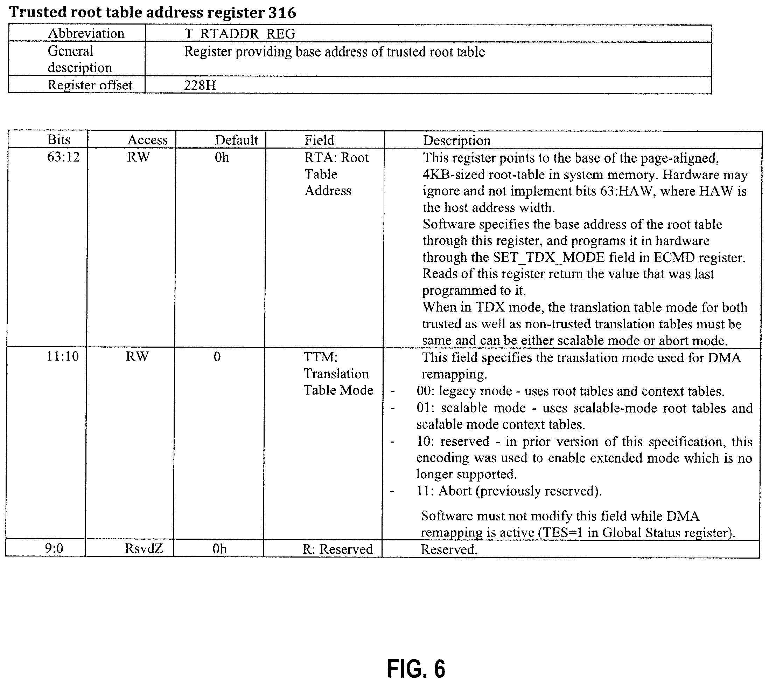

**Figure 6** is an example format of a trusted root table address register 316 according to examples of the disclosure, for example, for storing a base address to a trusted root table (e.g., trusted extended root table in trusted translation tables 324 in Figure 3B).

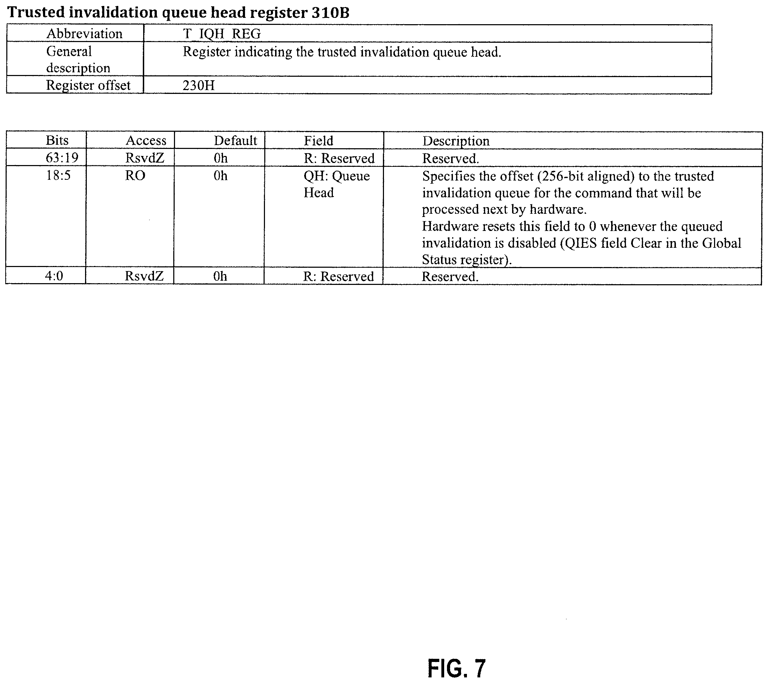

**Figure 7** is an example format of a trusted invalidation queue head register 310B according to examples of the disclosure, for example, for storing an indication of a head (e.g., head element of a plurality of elements) of a trusted invalidation queue (e.g., trusted invalidation queue 306 in Figure 3A).

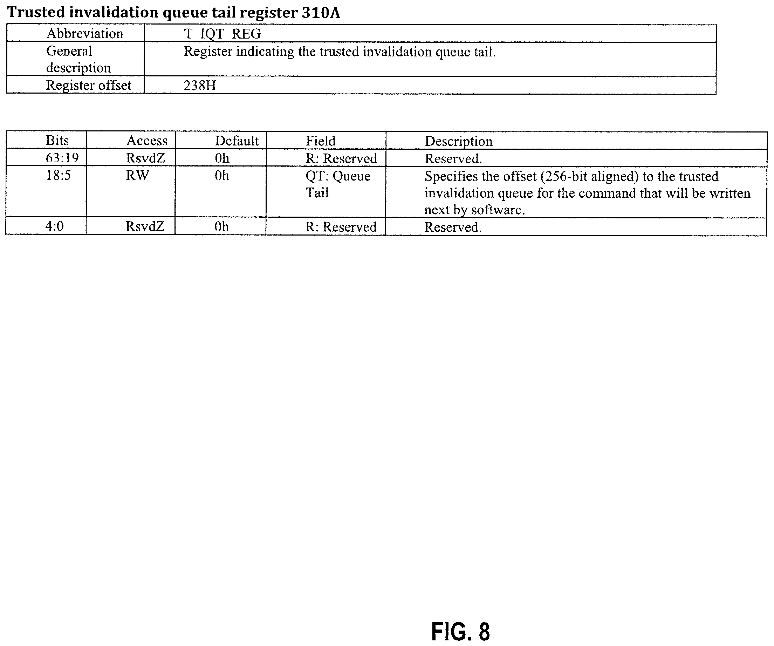

**Figure 8** is an example format of a trusted invalidation queue tail register 310A according to examples of the disclosure, for example, for storing an indication of a tail (e.g., tail element of a plurality of elements) of a trusted invalidation queue (e.g., trusted invalidation queue 306 in Figure 3A).

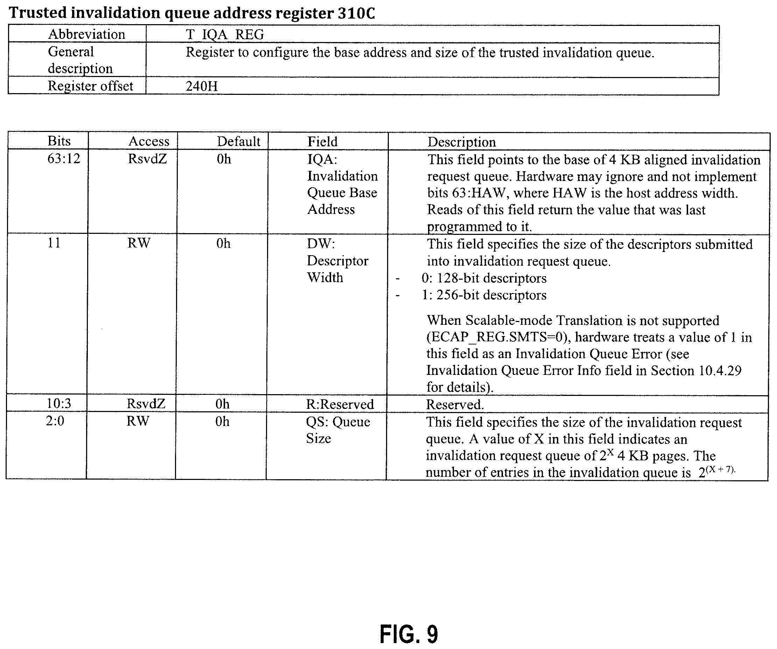

**Figure 9** is an example format of a trusted invalidation queue address register 310C according to examples of the disclosure, for example, to store an indication of the base address (e.g., and size) of the trusted invalidation queue (e.g., trusted invalidation queue 306 in Figure 3A).

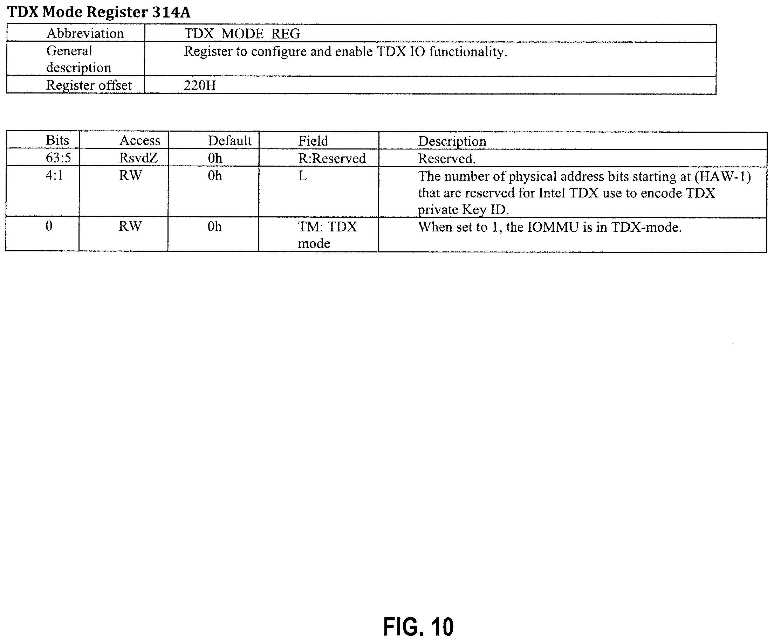

**Figure 10** is an example format of a trust domain (e.g., trust domain extensions (TDX)) mode register 314A according to examples of the disclosure, for example, to store a (e.g., command) value that controls if the IOMMU is in trust domain mode (e.g., TDX-mode).

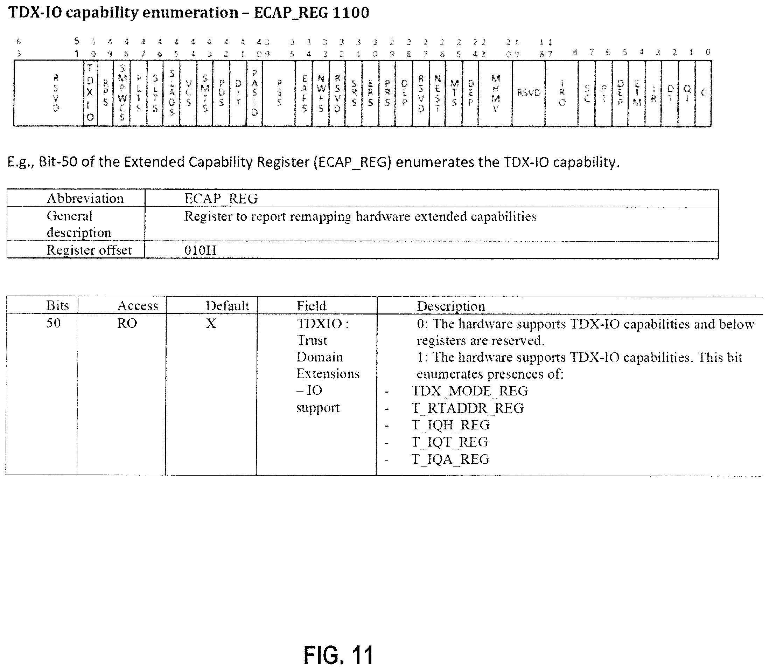

**Figure 11** is an example format of an extended capability register 1100 (e.g., as one of the registers in a processor and/or IOMMU) having trust domain IO capability enumeration according to examples of the disclosure, for example, in response to an enumeration request, is to store a value(s) that indicates if the hardware supports trust domain extension - input/output (IO) support (e.g., TDX-IO) capabilities (e.g., and if those registers are reserved (e.g., invalid) or otherwise).

In certain examples, if an implementation cannot ensure that the registers (e.g., trusted IOMMU registers 310A-310C and 316) are reserved and store zero values (RsvdZ) when ECAP _REG. TDXIO 1100 is 0, it should be guaranteed the writing of these registers (where applicable) are effectively no-operations (No-Ops) from the IOMMU operation point of view.

In certain examples, the ECAP_REG.TDXIO is 1 only when all the following qualifications/dependencies are satisfied: (i) default hardware reset of ECAP_REG.TDXIO is 1, (ii) ECAP_REG.SMTS = 1 (scalable mode support present), (iii) Effective Host Address Width (e.g., after hardware autonomous width (HAW) defeature inclusion with the maximum physical platform address (MAX_PA)) is 52 bit, and (iv) TDX-IO Defeature (see below) is OFF. In certain examples, the TDX-IO feature can be fully defeatured using a bit (e.g., bit 3 for TDX-IO) of a Capability Defeature Register (e.g., as one of the registers in a processor and/or IOMMU).

In certain examples, a set of registers is used for command submission (e.g., called "Enhanced Command") to an IOMMU with appropriate success/failure and thereby fault reporting, for examples, with these extended as below to support the SET_TDX_MODE command in TDX-IO

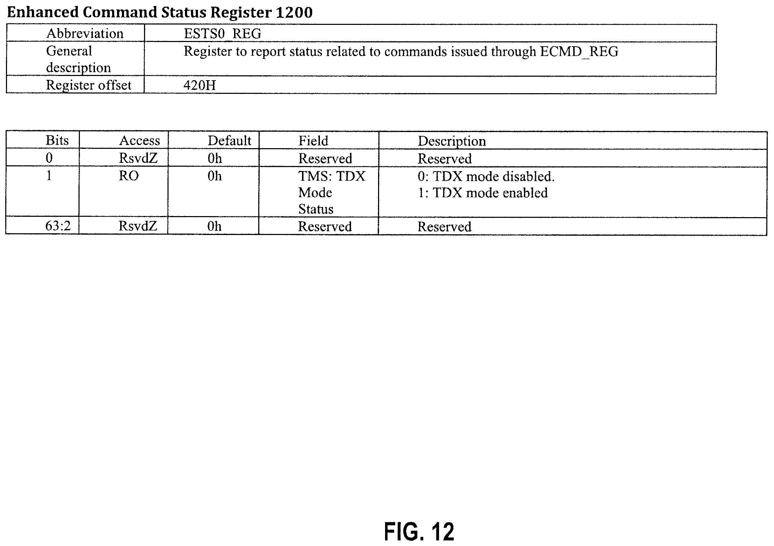

**Figure 12** is an example format of an enhanced command status register 1200 (e.g., as one of the registers in a processor and/or IOMMU) according to examples of the disclosure, for example, for the IOMMU to report status(es) related to commands issued through the enhanced command register (ECMD_REG) 314B.

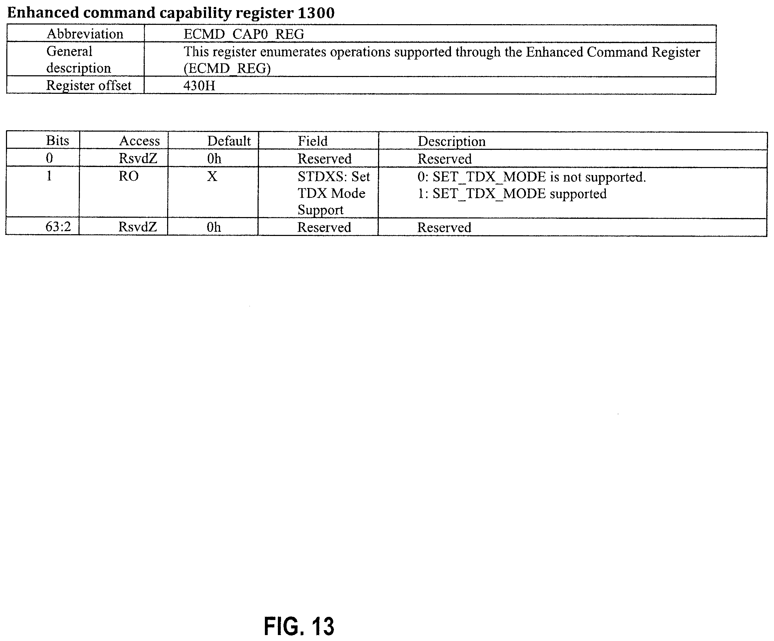

**Figure 13** is an example format of an enhanced command capability register 1300 (e.g., as one of the registers in a processor and/or IOMMU) according to examples of the disclosure, for example, in response to an enumeration request, is to store a value(s) that indicates if the hardware supports the (e.g., SET_TDX_MODE) through the enhanced command register (ECMD_REG) 314B.

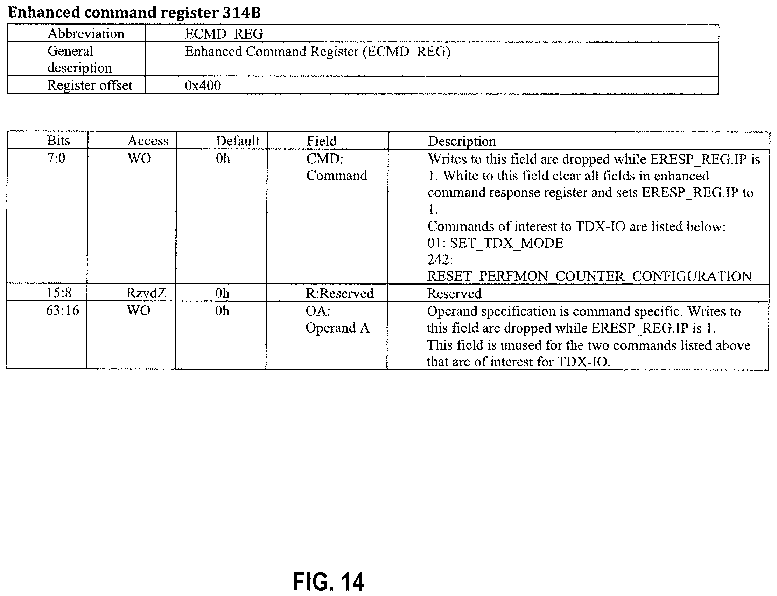

**Figure 14** is an example format of an enhanced command register 314B according to examples of the disclosure, for example, to store a (e.g., command) value that controls the operation(s) the IOMMU performs for trust domain mode (e.g., TDX-mode), e.g., setting the IOMMU into (or out of) TDX-IO mode.

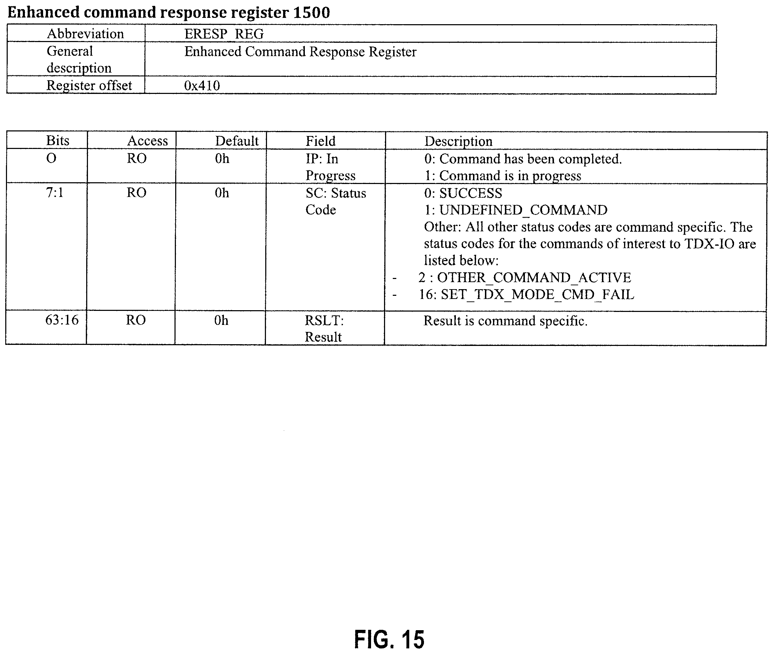

**Figure 15** is an example format of an enhanced command response register 1500 (e.g., as one of the registers in a processor and/or IOMMU) according to examples of the disclosure, for example, for the IOMMU to report responses related to commands issued through the enhanced command register (ECMD_REG) 314B, e.g., is a command in progress or has it been completed.

### Placement of registers (e.g., SEAM OS W policy group registers) in VT Base Address Register (VTBAR)

In certain examples, the registers include Protected Memory Enable Register (PMEN), Protected Low-Memory Base Register (PLMBASE), Protected Low-Memory Limit Register (PLMLIMIT), Protected High-Memory Base Register (PHMBASE), and Protected High-Memory Limit Register (PHMLIMIT). In certain examples, the PMEN, when set, is to enable DMA-protected memory regions setup through the PLMBASE, PLMLIMT, PHMBASE, PHMLIMIT registers.

In certain examples, PMEN, PLMBASE, PLMLIMIT, PHMBASE, and PHMLIMIT registers are shadowed in the HIOP, for example, where the HIOP also shadows the IOMMU SAI policy group registers of the IOMMU. In certain examples, the IOMMU SAI policy group registers are located at offset 0xF10 in the IOMMU VTBAR.

In certain examples, TDX-IO makes these registers into protected registers (e.g., covered by the SEAM_OS_W policy group). In certain examples, to avoid having to add new policy groups to the HIOP shadow logic and to avoid the HIOP shadow logic from having to use a different offset (e.g., than 0xF10), the IOMMU locate the SEAM_OS_W policy group registers of read access control (RAC), write access control (WAC), and control policy (CP) at certain offsets (e.g., offsets 0xF10, 0xF18, and 0xF20, respectively).

### Global Command Register - Processing Set Root Table Pointer (SRTP) bit

In certain examples, setting Set Root Table Pointer (SRTP) bit via global command register (GCMD_REG) 314C is unchanged from a non-IO VT-d specification definition, for example, it latches the legacy root pointer to an internal copy (e.g., along with the internal/external drain, global invalidation, etc.) with no other side effects from unexpected register values etc.

In certain examples, when in TDX mode, the trust domain manager (e.g., TDX-module) takes ownership of the RTADDR_REG as well as the GCMD_REG (write access controlled to SEAM), e.g., such that the trust domain manager (e.g., TDX-module) ensures that the RTADDR_REG programmed by the VMM has translation mode set to either scalable mode or abort.

### ENHANCED COMMAND (ECMD) ADDITION - SUPPORT 'SET_TDX MODE' COMMAND

In certain examples, an Enhanced Command (ECMD) register (e.g., enhanced command register (ECMD_REG) 314B in Figures 3A-3B) is a new VT-d command submission interface to the IOMMU 120 with corresponding response (e.g., success/failure) feedback to S/W based on the applicable error/compatibility checks. This is a cleaner contract between H/W and S/W as compared to other register-based commands (e.g., SRTP via GCMD) where the commands always execute irrespective of error checks and involved side effects on other IOMMU states that would ultimately invoke failure/fault detection in the data path operations. In certain examples, software is updated about the erroneous/incompatible command processing by the IOMMU.

In certain examples (e.g., along with architectural support for various performance monitoring (Perfmon) commands for IOMMU), ECMD supports new command "Set TDX Mode" (e.g., architectural) for enabling/disabling TDX Mode on an IOMMU. In certain examples, flows (e.g., SRTP, Set Interrupt Remap Table Pointer (SIRTP), etc.) transfer over to the ECMD. In certain examples, the ECMD register (used for submitting commands) is placed in the SEAM_OS_W policy group. In certain examples, in addition to the ECMD, GCMD, Protected Memory Range (PMR) related registers, and RTADDR are in SEAM_OS_W policy group.

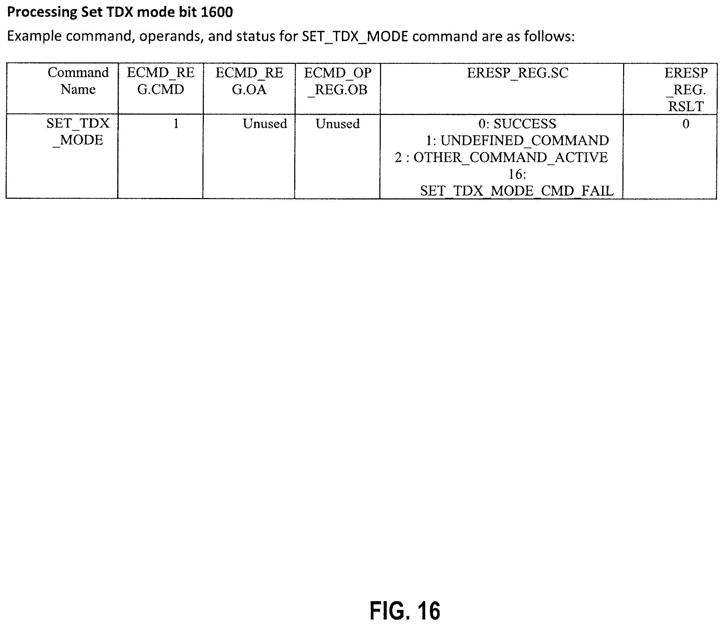

**Figure 16** is an example format of a processing set trust domain (e.g., trust domain extensions (TDX)) mode bit 1600 according to examples of the disclosure.

In certain examples, the ECMD_REG.CMD = SET_TDX_MODE command processing in the IOMMU (e.g., along with all associated operations) is as in the following pseudocode (where // is before comments/notes):

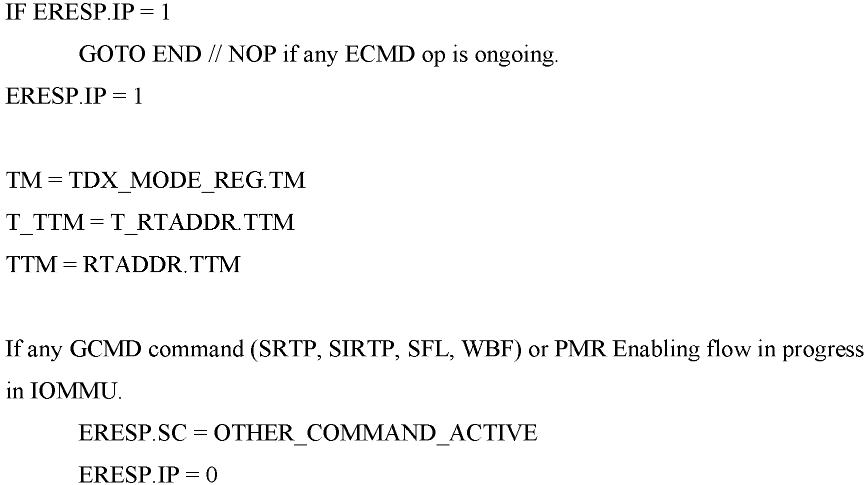

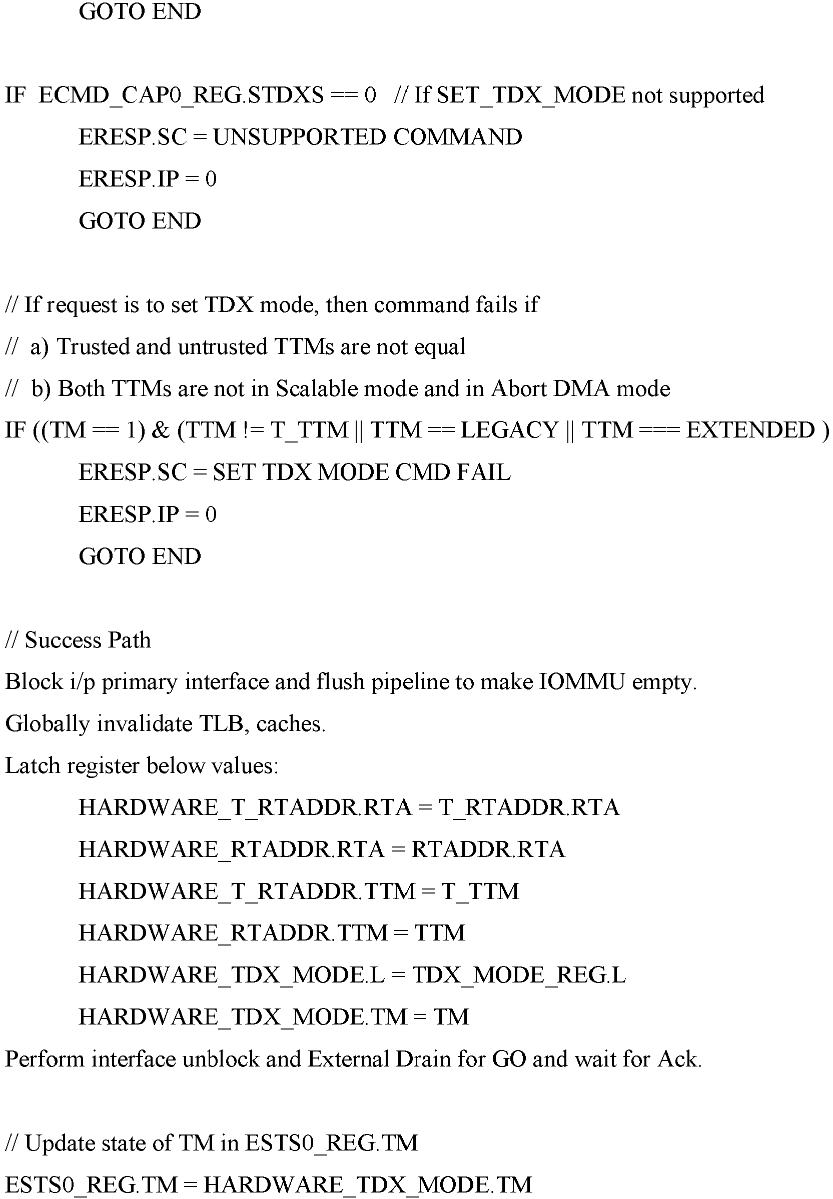

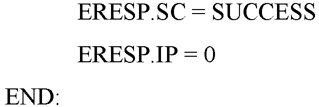

In certain examples, ECMD_CAP0.STDXS is dependent/qualified on ECAP_REG.TDXIO being 1, e.g., without TDX-IO capability, there is no Set TDX Mode command support. In certain examples, for TDX-IO, the trust domain manager (e.g., TDX Module) is to also reset the performance counter configurations as part of IOMMU initialization steps for transitioning to TDX_MODE, e.g., through the ECMD command 'RESET_PERFORMANCE_COUNTER_CONFIGURATION" which results in all counters being disabled and all configuration, filter, freeze, and overflow status registers set to their default value (e.g., to prevent any telemetry based attacks on trusted DMA request translations).

### INVALIDATION QUEUE PROCESSING

In certain examples, for supporting TDX-IO capability, an IOMMU has two sets of invalidation queues (IQ), for example, a non-trust domain (e.g., "normal") IQ maintained by the VMM (e.g., invalidation queue 304 in Figure 3A) and an architectural trusted invalidation queue (TIQ) (e.g., trusted invalidation queue 306 in Figure 3A), for example, in SEAM_OS_W PG and thereby in SEAM control in TDX_MODE of operation. In certain examples, for TIQ, separate base address, head and tail pointers are present architecturally, but there is only one set of IQ related registers for associated fault reporting.

In certain examples, when ECAP_REG.TDXIO is 1, the IOMMU round robins between the trusted and the untrusted invalidation queues independent of the INT_TDX_MODE_REG.TM value, e.g., if ECAP_REG. TDXIO is 0, then the IOMMU defaults to fetching only from the existing untrusted IQ.

In certain examples with TDX-IO capability, if there is one active IQ (non-trusted or trusted) being fetched and processed at a time, and there is an associated fault, it would be recorded and actions taken as per the IQ fault related registers. In certain examples, no security is associated with fault reporting as MSIs are handled by VMM/host OS. In certain examples, a pending fault will stop all IQ/TIQ related processing until it is dealt with by software.

In certain examples, the IOMMU operations when ECAP_REG.TDXIO = 1 can be summarized as follows:

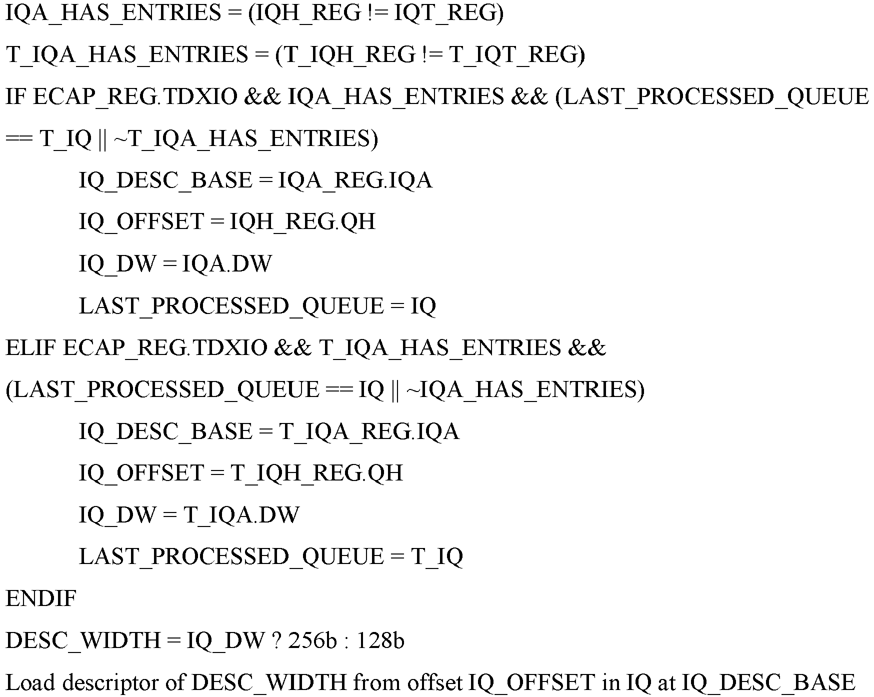

In certain examples, the round robin behavior is kept irrespective of TDX Mode to simplify the hardware. In certain examples, when ECAP_REG.TDXIO = 1, if TDX Mode = 0, trusted IQ is always empty as per TDX-module expected behavior/requirements and hence only the first IF condition will be satisfied if applicable.

### IOMMU SUPPORT FOR TRUSTED TRANSLATION WALKS

The following discuses architecture level changes in certain IOMMUs to support trusted translations/walks for requests coming in with ide_t = 1.

### Caches/TLB Extensions

### IOTLB

In certain examples, an IOTLB is extended with a new tag bit "trusted". In certain examples, when the IOTLB is filled, this tag bit is set to (ECAP_REG.TDXIO & INT_TDX_MODE_REG.TM & ide_t). In certain examples, when IOTLB is looked up, the (ECAP_REG.TDXIO & INT_TDX_MODE_REG.TM & ide_t) of the transaction is compared to the trusted bit to detect a match. In certain examples, the parity generation and/or verification on IOTLB tags includes the Trusted bit. In certain examples, the same behavior also applies to translation type cache (TTC) (e.g., at the micro-architectural level) read and/or match as well in the IOTLB pipeline.

### PASID table entry cache

In certain examples, a PASID table entry cache (PTC) is extended with a new tag bit - Trusted. In certain examples, when PTC is filled, this tag bit is set to (ECAP _REG.TDXIO & INT_TDX_MODE_REG.TM & ide_t). In certain examples, when PTC is looked up, the (ECAP _REG.TDXIO & INT_TDX_MODE_REG.TM & ide_t) of the transaction is compared to the Trusted bit to detect a match. In certain examples, the parity generation and verification on PTC tags should include the Trusted bit.

### Context entry cache

In certain examples, context entry cache (CTC) is extended with a new tag bit - Trusted. In certain examples, when CTC is filled, this tag bit is set to (ECAP _REG. TDXIO & INT_TDX_MODE_REG.TM & ide_t). In certain examples, when CTC is looked up, the (ECAP_REG.TDXIO & INT_TDX_MODE_REG.TM & ide_t) of the transaction is compared to the TDX bit to detect a match. In certain examples, the parity generation and verification on CTC tags should include the Trusted bit. In certain examples, this logically extends to TTC as well when the tag/lookup array is shared with the CTC.

### Root Table Selection

In certain examples, on an IOTLB miss (e.g., the mapping is not in the IOTLB, so a walk is to be performed from the translation tables), when IOMMU is to access the root table to perform an operation, the IOMMU selects between the HARDWARE_RTADDR_REG and the HARDWARE_T_RTADDR_REG based on (ECAP _REG.TDXIO & INT_TDX_MODE_REG.TM & ide_t) of the associated incoming request. In certain examples, when in TDX mode, if the request received for translation was with ide_t == 1, then the HARDWARE_T_RTADDR_REG is selected else the HARDWARE_RTADDR_REG is selected in all other cases. 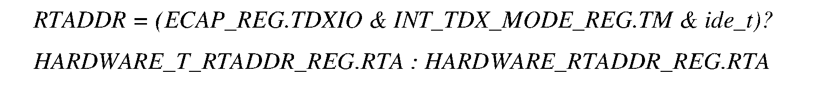 RTADDR = (ECAP_REG.TDXIO & INT_TDX_MODE_REG.TM & ide_t)? HARDWARE_T_RTADDR_REG.RTA : HARDWARE_RTADDR_REG.RTA

### New VT-d Faults & Associated Checks for TDX-IO trusted translations

In certain examples, UR is an unsupported request, CA is completer abort, IR is interrupt remapping, and NA is not applicable.

In certain examples, if the remapping hardware is not able to successfully process the translation-request (e.g., with or without PASID), a translation-completion without data is returned, for example, with a status code of UR (Unsupported Request) returned in the completion if the remapping hardware is configured to not support translation requests from this endpoint, and/or a status code of CA (Completer Abort) is returned if the remapping hardware encountered errors when processing the translation-request.

### PASID table entry walk - Enforcement of Domain ID partitioning & PGTT Values

In certain examples, in TDX_MODE, the domain ID is partitioned between TD VMs and non-TD VMs. In certain examples, non-TD VMs use domain IDs with bit L of domain ID set to 0 and TD VMs use domain IDs with bit L of domain ID set to 1. In certain examples, L is the most significant bit (MSB) of the effective domain ID width as enumerated by ECAP.ND field. In certain examples, the ECAP.ND enumerates a (e.g., 16-bit wide) domain ID (e.g., not accounting for de-feature) and hence L bit will be that MSB (e.g., bit 15 of bits 15-0). In certain examples, in TDX mode, when a page walk is being performed for untrusted requests (e.g., request with ide_t=0), if a PASID table entry is found with domain ID bit L set to 1 then it is treated as a terminal fault and such PASID table entries are not cached. In certain examples, this prevents a VMM from maliciously re-using a domain ID allocated to TDs and PASID allocated to TDs with an untrusted device to trigger a first/second level paging structure entry cache hit which is looked up by domain-ID, PASID (e.g., for first-level caches), and address. In certain examples, as Domain ID partitioning is done, no separate "Trusted" bit tags are required for the set of FL and SL level caches. In certain examples, the following fault check is used for TDX-IO security:
Fault check → IF "ECAP_REG.TDXIO & INT_TDX_MODE. TM & ~ide_t & Domain-id [L]", and if 1, then cause terminal fault as bit L is reserved for untrusted walks in PASID table entry in TDX_MODE.
In certain examples, the error reporting for this terminal fault is like error reporting for reserved bits.

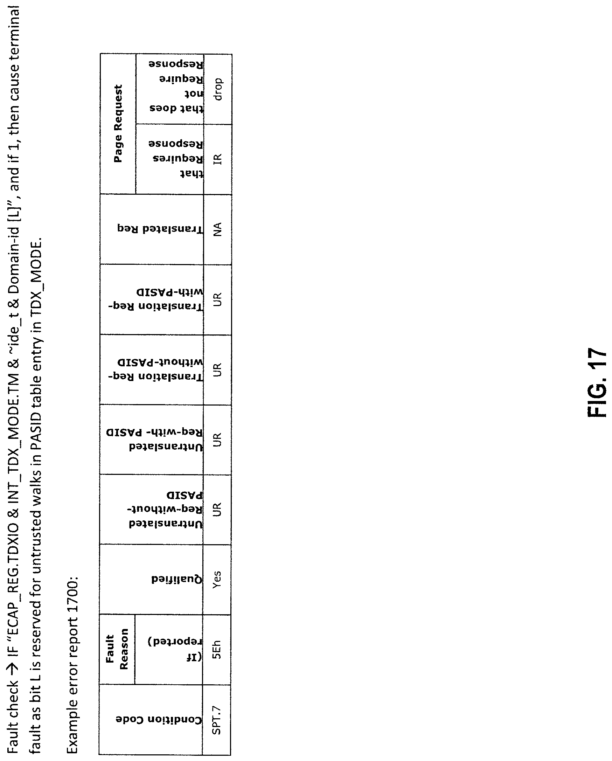

**Figure 17** is an example format of an example error report 1700 according to examples of the disclosure. In certain examples, certain (e.g., VT-d) faults are stored in a different category than other faults, e.g., where an SPT fault (e.g., condition code thereof) is a fault detected in a Scalable Mode PASID Table (SPT) entry (e.g., the Scalable Mode PASID Table in the trusted translation tables 324 shown in Figure 3B) and an SCT fault (e.g., condition code thereof) is a fault detected in a Scalable Mode Context Table (SCT) entry (e.g., the Scalable Mode (e.g., lower) Context Table in the trusted translation tables 324 shown in Figure 3B). In certain examples, the priority of condition code SPT.7 is just after SPT.3 and before SPT.4.

In certain examples, the following fault check is used for TDX-IO security: when ECAP _REG.TDXIO is 1, if TDX mode is enabled and the walk is for ide_t = 1, then the PASID Granular Translation Type (PGTT) is (e.g., must be) a certain value or values, e.g., 010b (e.g., 2^{nd} level only) or 011b (e.g., nested), and if not one of those values (e.g., those two values), then cause a terminal fault.

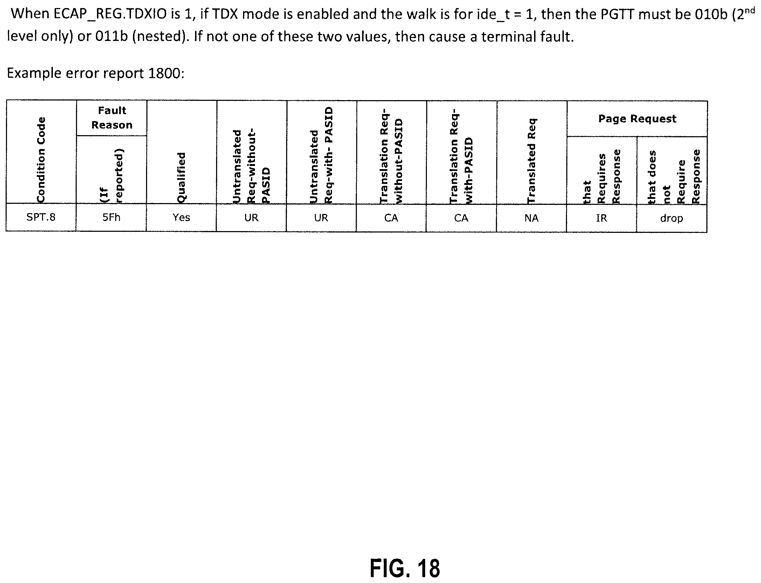

**Figure 18** is an example format of an example error report 1800 according to examples of the disclosure. In certain examples, the priority of condition code SPT.8 is just after SPT.4.4 and before SPT.5. In certain examples, this fault is introduced for increased robustness of operations and preventing any chances of a walk with PGTT values other than the ones mentioned for trusted requests in the tdx_mode (e.g., TDX Module expected behavior is to set PGTT in trusted PASID table entry as 2^{nd} level or nested).

### Page Walks in TDX mode

In certain examples, remapping hardware includes an indication of a field that indicates the maximum DMA virtual addressability supported by the remapping hardware. In certain examples, the Maximum Guest Address Width (MGAW) is computed as (N+1), where N is the value reported in this field. For example, a hardware implementation supporting 48-bit MGAW reports a value of 47 (101111b) in this field. In certain examples, if the value in this field is X, untranslated and translated DMA requests to addresses above 2^(x+1)-1 are always blocked by hardware and translations requests to address above 2^(x+1)-1 from allowed devices return a null Translation Completion Data Entry with R=W=0.

In certain examples, guest addressability for a given DMA request is limited to the minimum of the value reported through this field and the adjusted guest address width of the corresponding page-table structure, e.g., and adjusted guest address widths supported by hardware are reported through the SAGAW field.

In certain examples, implementations support a MGAW at least equal to the physical addressability (e.g., host address width) of the platform.

In certain examples, remapping hardware includes an indication of a (e.g., 5-bit field) the supported adjusted guest address widths (SAWAG), e.g., which represents the levels of page-table walks for the (e.g., 4KB) base page size supported by the hardware implementation. In certain examples, a value of 1 in any of these bits indicates the corresponding adjusted guest address width is supported, e.g., where the adjusted guest address widths corresponding to various bit positions within this field are:
0: 30-bit AGAW (2-level page table)
1: 39-bit AGAW (3-level page table)
2: 48-bit AGAW (4-level page table)
3: 57-bit AGAW (5-level page table)
4: 64-bit AGAW (6-level page table)

In certain examples, software is to ensure that the adjusted guest address width used to setup the page tables is one of the supported guest address widths reported in this field.

### SHARED bit

In certain examples, for TDs, guest physical addresses (GPA) with most significant bit set to 1 are called shared GPA and with most significant bit set to 0 are private GPA. In certain examples, the SHARED bit is evaluated as follows:$S_BIT = \left(PASIDTE.AW=='011b\right) ? 51 : 47$ 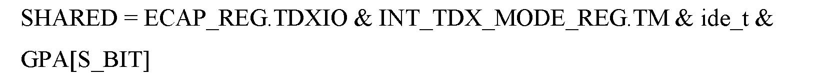 SHARED = ECAP_REG.TDXIO & INT _TDX_MODE_REG.TM & ide_t & GPA[S_BIT]

In certain examples, the S_BIT calculation does not need to include SAGAW and MGAW as these are separate VT-d checks and would raise fault if AW and SAGAW did not comply with each other and/or input GPA width is greater than what is allowed by MGAW and AW. In certain examples, the expected S/W behavior is that TDX-module would verify SAGAW and MGAW from a capabilities (CAP) register to support multiple (e.g., 4 and/or 5) level EPT before setting TDX Mode = 1.

### Faults during first level page table (FLPT) walk

In certain examples, the SHARED bit being 1 in first-level paging entry (e.g., FL-PML5E, FL-PML4E, FL-PDPE with PS bit 0, FL-PDE with PS bit 0) with Present (P) field set are treated as terminal fault. In certain examples, for data read and write, FL-PDPE can have SHARED bit 1 if PS is set to 1 i.e., maps a 1 GB page and FL-PDE can have SHARED bit 1 if PS is set to 1 i.e., maps a 2 MB page and FL-PTE can have SHARED bit 1. In certain examples, for instruction fetches, if SHARED bit is set to 1 in FL-PDPE with page size (PS) set to 1, maps a 1 GB page, or FL-PDE with PS set to 1, maps a 2 MB page, or in FL-PTE, then cause a terminal fault. In certain examples, this fault check enforces that a TD can locate FLPT paging structures only in private GPA and data read/write can be done to shared memory but not instruction fetches. In certain examples, the fault is a terminal fault and signaled as set fault-log (SFL) SFL.11 (e.g., for both leaf and non-leaf paging structures). o set/update the fault-log pointer to set/update the fault-log pointer. In certain examples, SHARED will always evaluate to 0 if TDX mode is not enabled or if the walk is for a transaction with ide_t == 0.

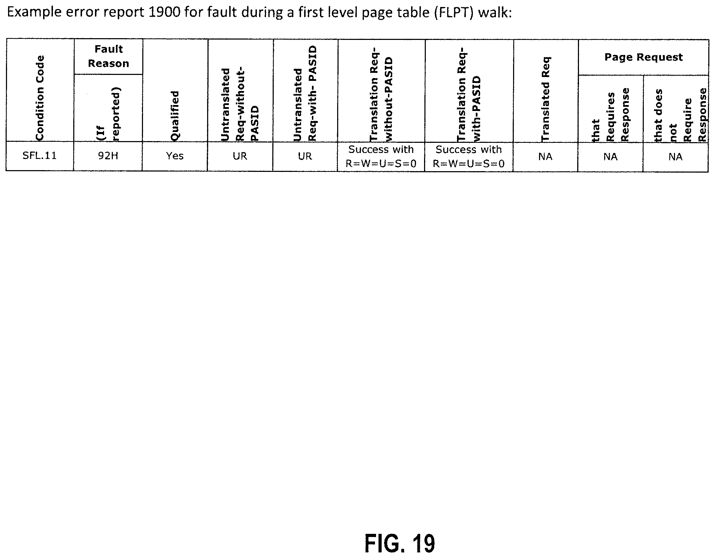

**Figure 19** is an example format of an example error report 1900 for a fault during a first level page table (FLPT) walk according to examples of the disclosure. In certain examples, the priority of scalable mode first level (SFL) SFL.11 is just after SFL.3. In certain examples, this fault is introduced to catch bad TD behavior, e.g., to avoid core side accesses.

### Faults during second level page table (SLPT) walk

In certain examples, SLPT walks require that all second level (SL) paging structure entries (e.g., except the root SL paging structure entry and the final address of the translation) do not (e.g., must not) have TD private KeyID if the walk was started with a GPA with SHARED set to 1. In certain examples, this fault check prevents a VMM from locating SL paging structure entries or final translation from SL paging to be mapped to TD private memory. In certain examples, the TDX_MODE_REG.L indicates the number of physical address bits starting at HAW-1 that are reserved for encoding TDX Key IDs. If, for example, HAW is 46 and L is 6, the bits 45:40 if set in a physical address indicate that the physical address has a private Key ID. In certain examples, this is evaluated as follows:

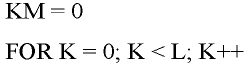

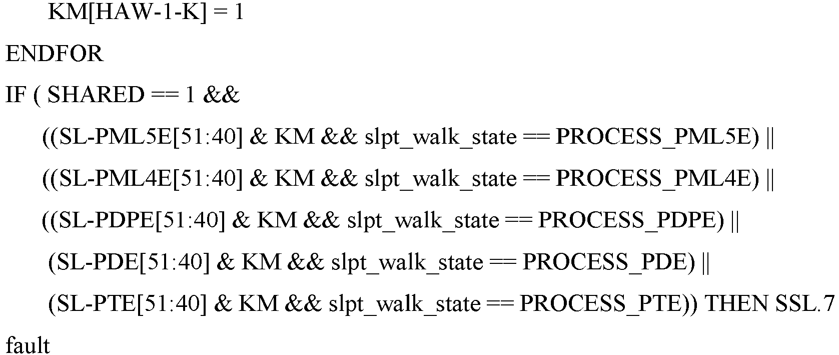

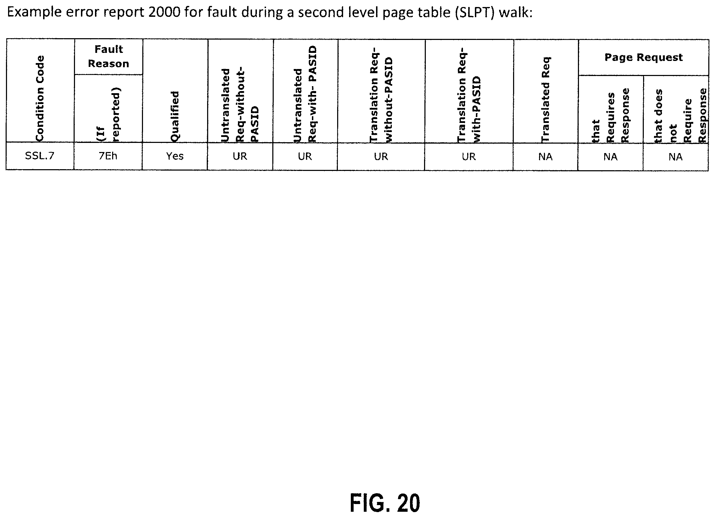

**Figure 20** is an example format of an example error report 2000 for a fault during a second level page table (SLPT) walk according to examples of the disclosure. In certain examples, the priority of scalable mode second level (SSL) SSL.7 is just after SSL.3. In certain examples, this fault is introduced to achieve TDX-IO security.

### ALLOW TDX KID GENERATION

In certain examples, the IOMMU relies on the KeyID filter in the HIOP (e.g., key filter 404 and/or key filter 410 in Figure 4) to abort a memory request from the device or an access from the IOMMU itself to access its translation structures with TDX KeyID unless the IOMMU allows memory request to have a TDX KeyID. In certain examples, this is accomplished by a logical signal from the IOMMU to the HIOP called allow_tdx_kid. In certain examples, physically, allow_tdx_kid is implemented as multiple physical signal instantiations at the different interfaces, e.g., resp_allow_tdx_kid at primary output, mem_allow_tdx_kid for memory interface and corresponding addition at secondary interface as well, e.g., as a micro-architectural concept.

In certain examples, the allow_tdx_kid value is driven by the IOMMU as follows to indicate whether the access can have a TDX KeyID as follows:
1. The IOMMU sets allow_tdx_kid to 0 for memory requests that cannot be to private memory in the TDX-IOMMU architecture. This includes following memory requests:
   - Interrupt Remap Table Entry
   - Posted interrupt descriptor.
   - Page request queue entry
   - Legacy mode root entry
   - Legacy mode context entry
   - Writes to the interrupt address range - 0xFEEx_xxxx - for a device originated interrupt write, e.g., for these allow_tdx_kid is 0 whether interrupt remapping is enabled, disabled, or bypassed.
   - Interrupt writes generated by the IOMMU itself like fault event, page request event, invalidation event, etc.
   - Status writes on invalidation wait descriptor processing (irrespective of the queue from which the descriptor was processed).
2. IOMMU translation structures that are always in private memory when TDX_MODE is 1 and the translation is for an ide_t == 1 request. For these requests allow_tdx_kid is set to TDX_MODE & ide_t. This includes memory request to following structures:
   - Scalable mode root entry
   - Scalable mode context entry
   - Scalable mode PASID directory entry
   - Scalable mod PASID table entry
   - First level paging structure entries
3. IOMMU translation structures that can be in private or shared memory based on the SHARED bit (for ide_t = 1 and TDX_MODE = 1) associated with the walk. Here allow_tdx_kid is set as TDX_MODE & ide_t as fault check (SSL.7) is used to detect private keyID in shared SL structures in the IOMMU SL page walker (e.g., it does not depend on HIOP keyID filter to catch this. Allow_tdx_kid = 1 allows private or shared keyIDs):
   - Second level paging structure entries
4. The trusted invalidation queue is always in private memory. Thus, IOMMU drives allow_tdx_kid to 1 for the following accesses in the TDX_MODE:
   - Trusted invalidation queue entry

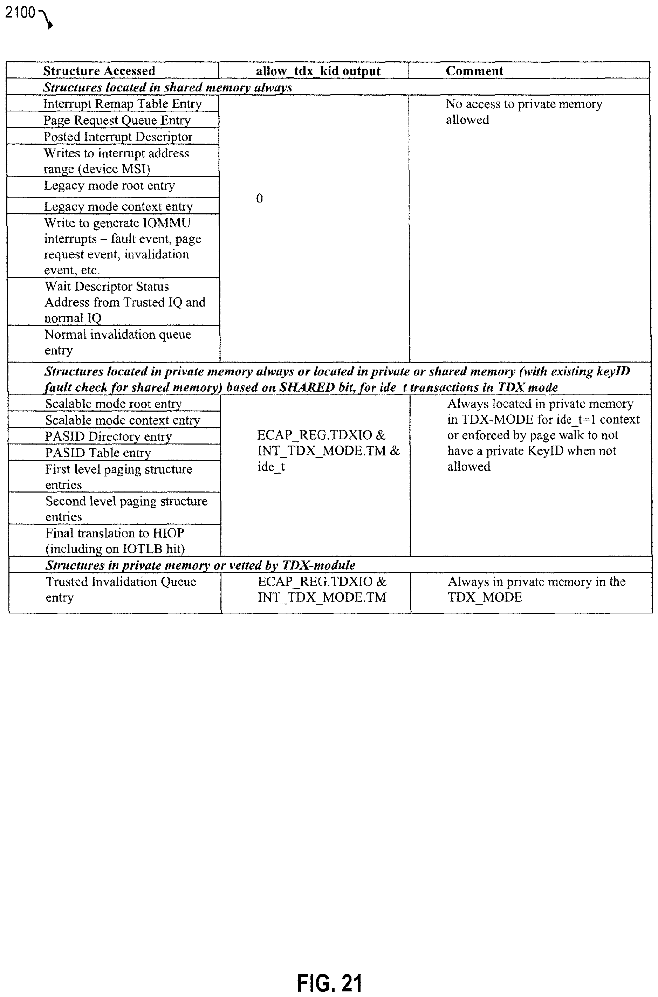

Figure 21 is a table of translation structures 2100 according to examples of the disclosure.

### TRUST DOMAIN MANAGER (E.G., TDX-MODULE) RESTRICTIONS AND REQUIREMENTS

In certain examples, a VMM hands control of the IOMMU to the trust domain manager (e.g., TDX-module) if it discovers TDX-IO capable device(s) in the scope of the IOMMU, e.g., by invoking a function in the TDX-module. The following sections specify an example programming sequence and restrictions the TDX-module is to (e.g., must) observe for:
1. Placing IOMMU in TDX mode
2. VMM programming of registers in SEAM_OS_W
3. Configuring trusted translation tables
4. Clearing TDX mode for an IOMMU

### Placing IOMMU in TDX mode:

1. Remove BOOT _BIOS, POST _BOOT, and SMM SAI from the SEAM OS _W policy group, e.g., make the SEAM_OS_W policy group registers restricted to SEAM SAI.
2. Fail if any of the following errors are detected:
   a. ECAP_REG.TDXIO is 0 - TDX-IO capability not supported.
   b. CAP_REG.SAGAW[10] is 0 - 4-level page table not supported.
   c. CAP_REG.SAGAW[11] is 0 and CPU EPT supports 5-level page tables - If CPU supports 5-level page tables then IOMMU is to (e.g., must) also support 5-level page tables.
   d. If CAP_REG.SAGAW[11] is 1 and CAP_REG.MGAW is not 52 bits
   e. If CAP_REG.SAGAW[10] is 1 and CAP_REG.MGAW is less than 48 bits
   f. ERESP_REG.IP is 1 - there is an enhanced command in progress.
   g. ESTS0_REG.TMS is 1 - IOMMU is already in in TDX mode.
   h. GSTS_REG.TES is 0 - IOMMU translations are not enabled.
   i. GSTS_REG.QIES is 0 - Queued Invalidations are not enabled.
   j. PMEN_REG.EPM or PMEN_REG.PRS are not 0 - protected memory ranges are (e.g., must) be disabled.
   k. ECAP_REG.TDXIO is 0 - TDX mode is not supported.
   l. RTADDR_REG.TTM is not scalable mode (e.g., is not 01b).
3. Configure T_RTADDR_REG with address of trusted translation table root page and the translation table mode, e.g., root table address is to (e.g., must) have a TDX Key ID inserted and/or TTM is to (e.g., must) be set to Scalable Mode (e.g., 01b).
4. Configure T_IQA_REG with address of trusted invalidation queue base page, e.g., this address is to (e.g., must) have TDX Key ID inserted and/or the T_IQA_REG is to (e.g., must) be configured with 256-bit descriptor width.
5. Initialize T_IQT_REG to value of T_IQH_REG, e.g., make tail equal to head to indicate empty queue.
6. Configure TDX_MODE_REG.L with the value of .TDX_RESERVED_KEYID_BITS field from IA32_TME_ACTIVATE MSR and set TDX_MODE_REG.TM to 1.
7. Write ECMD_REG.CMD = SET_TDX_MODE
8. Wait for command completion i.e., ERSP_REG.IP to become 0. Note this step can be done by the VMM.
9. Verify that the TDX mode was enabled by reading ESTS0_REG.TMS and checking that it is 1.
10. Write ECMD_REG.CMD = RESET_PERFMON_COUNTER_CONFIGURATION
11. Wait for command completion i.e., ERSP_REG.IP to become 0. Note this step can be done by the VMM.
On completion of this sequence, in certain examples, the TDX mode is enabled and the root as well as trusted root address registers are latched into the IOMMU hardware. In certain examples, TDX_MODE_REG.L is to (e.g., must) not be changed once TDX mode has been enabled, e.g., changing the L can lead to undefined behavior in the IOMMU and affect TDX security.

### SEAM OS W register accesses from VMM

In certain examples, when TDX mode is enabled, the SEAM_OS_W registers are not writeable by the VMM, e.g., the VMM is provided an application programming interface (API) function to program the following registers if needed:
- RTADDR_REG - enforce the following restrictions.
   ∘ Address value provided by the VMM does not have a TDX Key ID.
   ∘ TTM value provided by the VMM is to (e.g., must) be scalable mode.
- GCMD_REG - enforce the following restrictions.
   ∘ Queued invalidation cannot be disabled.
   ∘ Translation Enable cannot be set to 0.

### Configuring trusted translation tables

1. Read CAP_REG.ND to determine the IOMMU supported domain with. The MSB of the supported domain ID is the L bit. For example, if domain ID width is 16-bit then L bit is bit 15. This configuration can be read out and cached as part of placing IOMMU in TDX mode.
2. Observe following restrictions when configuring context entry in trusted translation table.
   - DTE - Device TLB Enable - 0 - GNR IOMMU does not support secure ATS.
   - PRE - Page Request Enable - 0 - GNR IOMMU does not support secure page requests.
3. Observe following restrictions when configuring PASID table entry in trusted translation table.
   - Set L bit of DID field to 1.
   - Set address width (AW) to either 010b (4-level) or 011 (5-level).
   - Set PGTT to 010b (second-level translation only).
4. Observe following restrictions on the SLPT configured into the trusted PASID table entry.
   - Store the HKID assigned to the TD in the secure EPT entries (e.g., TD secEPT in Figure 3). These are not consumed by the CPU PMH but will be consumed by the IOMMU.
   - Allow VMM to configure private EPT PML4 (e.g., when 4 level EPT is enabled) or EPT PML5 (e.g., when 5 level EPT is enabled) to next level shared EPT paging structures (e.g., TD sharedEPT in Figure 3). Ensure that the address provided by the VMM does not have a TDX Key ID
5. Make PASID table entry in trusted translation tables present only when the TD has accepted the PASID or device interface.

### Clearing TDX mode

In certain examples, the VMM may request that an IOMMU TDX mode be cleared, e.g., where the TDX module follows the following sequence.
1. Fail if the following conditions are detected:
   a. ESTS0_REG.TMS is 0 - IOMMU is not in TDX mode.
   b. T_IQH_REG is not equal to T_IQT_REG - there are invalidations in progress.
   c. There are valid mappings in the trusted translation table.
   d. ERESP_REG.IP is 1 - there is an enhanced command in progress.
2. Set following trusted registers to 0 i.e., their reset default values.
   a. T_RTADDR_REG
   b. T_IQA_REG
   c. TDX_MODE_REG - both L and TM set to 0.
3. Set ECMD_REG.CMD = SET_TDX_MODE.
4. Add back BOOT _BIOS, POST _BOOT, and SMM SAI to SEAM_OS_W policy group.
5. Wait for command completion, e.g., ERSP_REG.IP to become 0. Note this step can be done by the VMM.
On completion of this sequence, the TDX mode is disabled in certain examples.

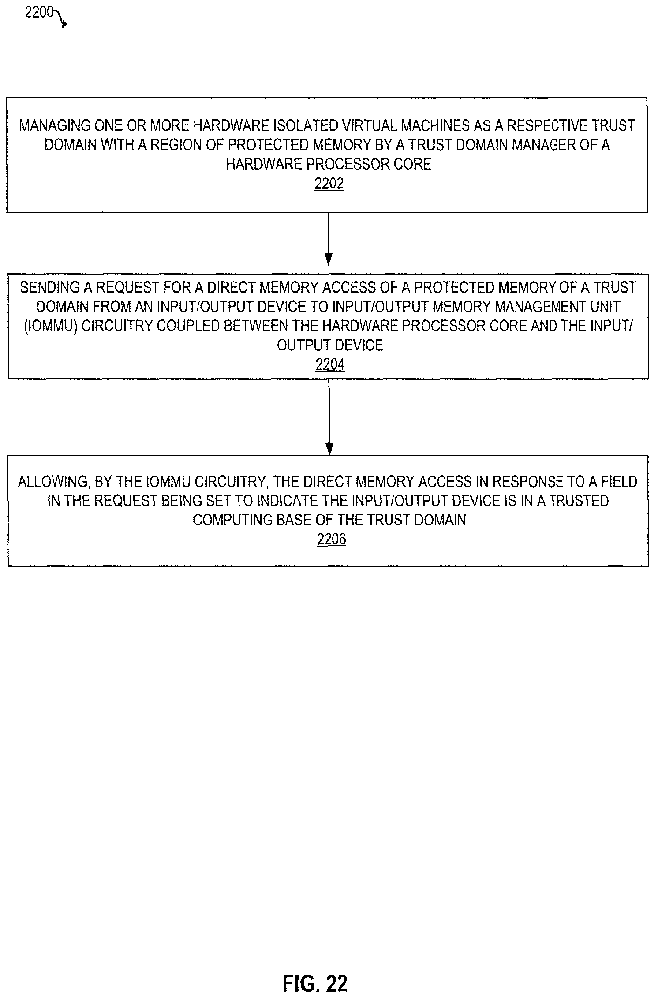

**Figure 22** is a flow diagram illustrating operations 2200 of a method for processing a request for a direct memory access of a protected memory of a trust domain from an input/output device according to examples of the disclosure. Some or all of the operations 2200 (or other processes described herein, or variations, and/or combinations thereof) are performed under the control of a trust domain manager and/or IOMMU as implemented herein and/or one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 2200 are performed by IOMMU 120 (e.g., and/or trust domain manager 101) of the other figures.

The operations 2200 include, at block 2202, managing one or more hardware isolated virtual machines as a respective trust domain with a region of protected memory by a trust domain manager of a hardware processor core. The operations 2200 further include, at block 2204, sending a request for a direct memory access of a protected memory of a trust domain from an input/output device to input/output memory management unit (IOMMU) circuitry coupled between the hardware processor core and the input/output device. The operations 2200 further include, at block 2206, allowing, by the IOMMU circuitry, the direct memory access in response to a field in the request being set to indicate the input/output device is in a trusted computing base of the trust domain.

In certain examples, a (e.g., TDX-IO) register (e.g., in an IOMMU) is read and/or written to by an instruction, for example, according to a method for processing a register instruction according to examples of the disclosure. A processor (e.g., or processor core) may perform operations of a method, e.g., in response to receiving a request to execute an instruction from software. Operations may include processing a "TDX-IO" instruction by performing a: fetch of an instruction (e.g., having an instruction opcode corresponding to the command mnemonic), decode of the instruction into a decoded instruction, retrieve data associated with the instruction, (optionally) schedule the decoded instruction for execution, execute the decoded instruction to set the register, and thus control the functionality of the TDX-IO commands, and commit a result of the executed instruction.

Exemplary architectures, systems, etc. that the above may be used in are detailed below. Exemplary instruction formats that may cause enqueuing of a job for an accelerator are detailed below.

At least some examples of the disclosed technologies can be described in view of the following examples:
Example 1. An apparatus comprising:
   a hardware processor core comprising a trust domain manager to manage one or more hardware isolated virtual machines as a respective trust domain with a region of protected memory; and
   input/output memory management unit (IOMMU) circuitry coupled between the hardware processor core and an input/output device, wherein the IOMMU circuitry is to, for a request from the input/output device for a direct memory access of a protected memory of a trust domain, allow the direct memory access in response to a field in the request being set to indicate the input/output device is in a trusted computing base of the trust domain.
Example 2. The apparatus of example 1, wherein the field in the request is a set of one or more bits in a prefix according to a Peripheral Component Interconnect Express (PCIe) standard.
Example 3. The apparatus of example 1, wherein, in response to the field in the request being set, the IOMMU circuitry is to generate an indication that a physical address of the protected memory of the trust domain is allowed to have a private key of the trust domain.
Example 4. The apparatus of example 1, wherein, in response to the field in the request being set, the IOMMU circuitry is to generate an indication that a physical address of the protected memory of the trust domain is allowed to have a shared key of the trust domain and a virtual machine monitor of the one or more hardware isolated virtual machines .
Example 5. The apparatus of example 1, wherein, in response to the field in the request being set, the IOMMU circuitry is to access a trusted data structure of virtual address to physical address mappings managed by the trust domain manager and not by a virtual machine monitor of the one or more hardware isolated virtual machines.
Example 6. The apparatus of example 5, wherein, in response to the field in the request not being set, the IOMMU circuitry is to access a data structure of virtual address to physical address mappings managed by the virtual machine monitor and not access the trusted data structure of virtual address to physical address mappings managed by the trust domain manager.
Example 7. The apparatus of example 1, wherein the trust domain manager, and not a virtual machine monitor of the one or more hardware isolated virtual machines, is permitted to cause an indication of invalidation of one or more blocks of the protected memory of the trust domain to be stored in a trusted invalidation queue.
Example 8. The apparatus of example 1, wherein the IOMMU circuitry comprises a trusted root table pointer register that is accessible by the trust domain manager and not by a virtual machine monitor of the one or more hardware isolated virtual machines.
Example 9. A method comprising:
   managing one or more hardware isolated virtual machines as a respective trust domain with a region of protected memory by a trust domain manager of a hardware processor core;
   sending a request for a direct memory access of a protected memory of a trust domain from an input/output device to input/output memory management unit (IOMMU) circuitry coupled between the hardware processor core and the input/output device; and
   allowing, by the IOMMU circuitry, the direct memory access in response to a field in the request being set to indicate the input/output device is in a trusted computing base of the trust domain.
Example 10. The method of example 9, wherein the field in the request is a set of one or more bits in a prefix according to a Peripheral Component Interconnect Express (PCIe) standard.
Example 11. The method of example 9, further comprising, in response to the field in the request being set, generating, by the IOMMU circuitry, an indication that a physical address of the protected memory of the trust domain is allowed to have a private key of the trust domain.
Example 12. The method of example 9, further comprising, in response to the field in the request being set, generating, by the IOMMU circuitry, an indication that a physical address of the protected memory of the trust domain is allowed to have a shared key of the trust domain and a virtual machine monitor.
Example 13. The method of example 9, further comprising, in response to the field in the request being set, accessing, by the IOMMU circuitry, a trusted data structure of virtual address to physical address mappings managed by the trust domain manager and not by a virtual machine monitor of the one or more hardware isolated virtual machines.
Example 14. The method of example 13, further comprising, in response to the field in the request not being set, accessing, by the IOMMU circuitry, a data structure of virtual address to physical address mappings managed by the virtual machine monitor and not accessing, by the input/output translation lookaside buffer, the trusted data structure of virtual address to physical address mappings managed by the trust domain manager.
Example 15. The method of example 9, further comprising, permitting the trust domain manager, and not a virtual machine monitor of the one or more hardware isolated virtual machines, to store an indication of invalidation of one or more blocks of the private memory of the trust domain in a trusted invalidation queue.
Example 16. The method of example 9, further comprising, in response to the field in the request being set, accessing a trusted root table pointer register of the **IOMMU** circuitry, and, in response to the field in the request not being set, not accessing the trusted root table pointer register of the IOMMU circuitry.
Example 17. A system comprising:
   a hardware processor core comprising a trust domain manager to manage one or more hardware isolated virtual machines as a respective trust domain with a region of protected memory;
   an input/output device coupled to the hardware processor core; and
   input/output memory management unit (IOMMU) circuitry coupled between the hardware processor core and the input/output device, wherein the IOMMU circuitry is to, for a request from the input/output device for a direct memory access of a protected memory of a trust domain, allow the direct memory access in response to a field in the request being set to indicate the input/output device is in a trusted computing base of the trust domain.
Example 18. The system of example 17, wherein the field in the request is a set of one or more bits in a prefix according to a Peripheral Component Interconnect Express (PCIe) standard.
Example 19. The system of example 17, wherein, in response to the field in the request being set, the IOMMU circuitry is to generate an indication that a physical address of the protected memory of the trust domain is allowed to have a private key of the trust domain.
Example 20. The system of example 17, wherein, in response to the field in the request being set, the IOMMU circuitry is to generate an indication that a physical address of the protected memory of the trust domain is allowed to have a shared key of the trust domain and a virtual machine monitor.
Example 21. The system of example 17, wherein, in response to the field in the request being set, the IOMMU circuitry is to access a trusted data structure of virtual address to physical address mappings managed by the trust domain manager and not by a virtual machine monitor of the one or more hardware isolated virtual machines.
Example 22. The system of example 21, wherein, in response to the field in the request not being set, the IOMMU circuitry is to access a data structure of virtual address to physical address mappings managed by the virtual machine monitor and not access the trusted data structure of virtual address to physical address mappings managed by the trust domain manager.
Example 23. The system of example 17, wherein the trust domain manager, and not a virtual machine monitor of the one or more hardware isolated virtual machines, is permitted to cause an indication of invalidation of one or more blocks of the private memory of the trust domain to be stored in a trusted invalidation queue.
Example 24. The system of example 17, wherein the IOMMU circuitry comprises a trusted root table pointer register that is accessible by the trust domain manager and not by a virtual machine monitor of the one or more hardware isolated virtual machines.

In yet another example, an apparatus comprises a data storage device that stores code that when executed by a hardware processor causes the hardware processor to perform any method disclosed herein. An apparatus may be as described in the detailed description. A method may be as described in the detailed description.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, November 2018; and see Intel^{®} Architecture Instruction Set Extensions Programming Reference, October 2018).

### Exemplary Instruction Formats

Examples of the instruction(s) described herein may be embodied in different formats. Additionally, exemplary systems, architectures, and pipelines are detailed below. Examples of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While examples are described in which both vector and scalar operations are supported through the vector friendly instruction format, alternative examples use only vector operations the vector friendly instruction format.

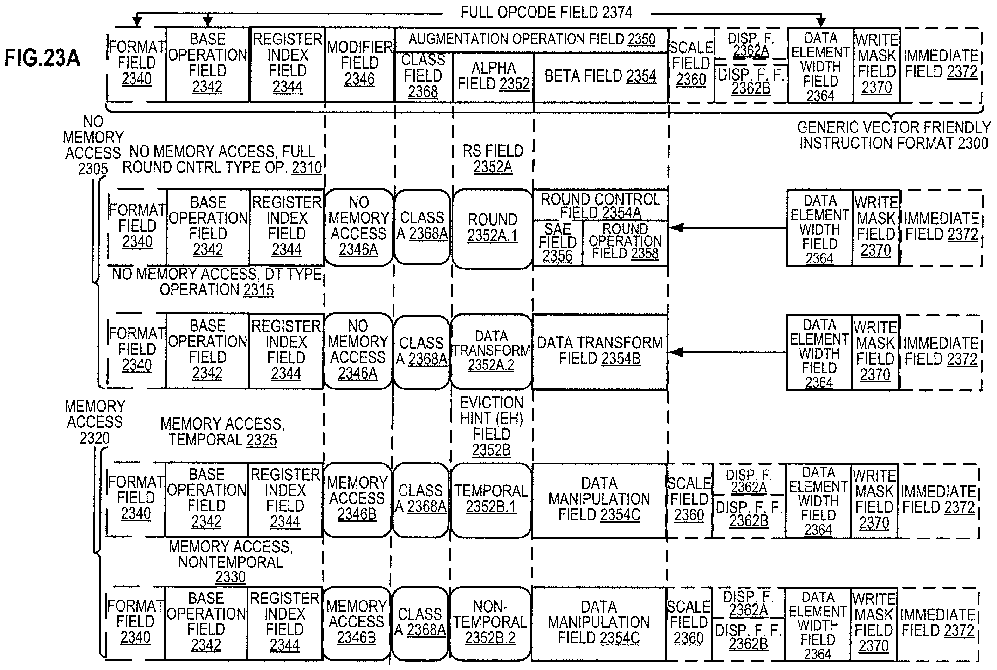

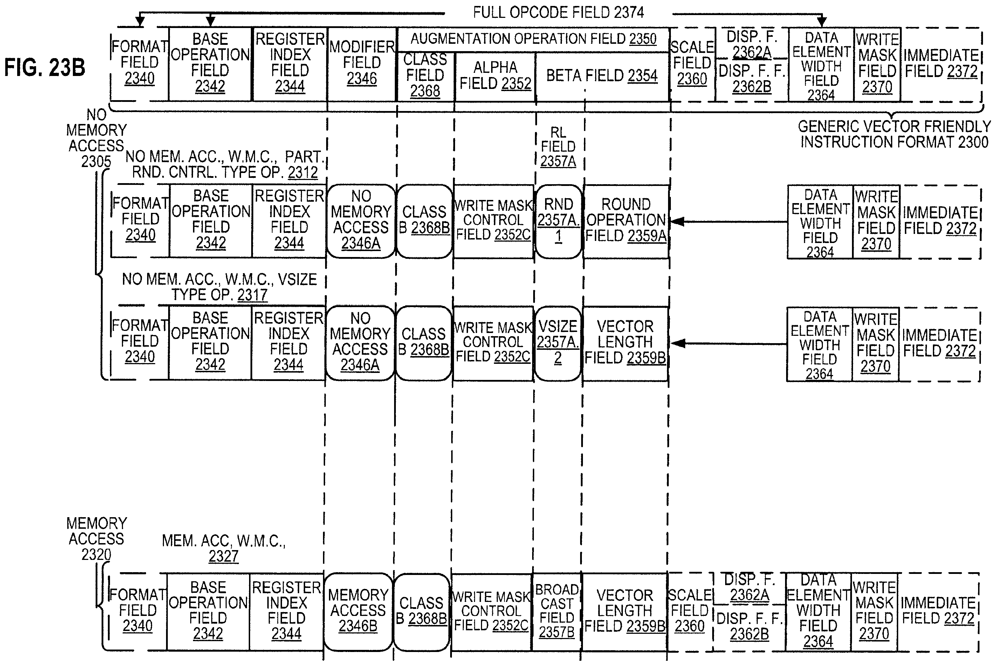

**Figures 23A-23B** are block diagrams illustrating a generic vector friendly instruction format and instruction templates thereof according to examples of the disclosure. Figure 23A is a block diagram illustrating a generic vector friendly instruction format and class A instruction templates thereof according to examples of the disclosure; while **Figure 23B** is a block diagram illustrating the generic vector friendly instruction format and class B instruction templates thereof according to examples of the disclosure. Specifically, a generic vector friendly instruction format 2300 for which are defined class A and class B instruction templates, both of which include no memory access 2305 instruction templates and memory access 2320 instruction templates. The term generic in the context of the vector friendly instruction format refers to the instruction format not being tied to any specific instruction set.

While examples of the disclosure will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative examples may support more, less and/or different vector operand sizes (e.g., 256 byte vector operands) with more, less, or different data element widths (e.g., 128 bit (16 byte) data element widths).

The class A instruction templates in **Figure 23A** include: 1) within the no memory access 2305 instruction templates there is shown a no memory access, full round control type operation 2310 instruction template and a no memory access, data transform type operation 2315 instruction template; and 2) within the memory access 2320 instruction templates there is shown a memory access, temporal 2325 instruction template and a memory access, non-temporal 2330 instruction template. The class B instruction templates in **Figure 23B** include: 1) within the no memory access 2305 instruction templates there is shown a no memory access, write mask control, partial round control type operation 2312 instruction template and a no memory access, write mask control, vsize type operation 2317 instruction template; and 2) within the memory access 2320 instruction templates there is shown a memory access, write mask control 2327 instruction template.

The generic vector friendly instruction format 2300 includes the following fields listed below in the order illustrated in **Figures 23A-23B****.**

Format field 2340 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 2342 - its content distinguishes different base operations.

Register index field 2344 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one example N may be up to three sources and one destination register, alternative examples may support more or less sources and destination registers (e.g., may support up to two sources where one of these sources also acts as the destination, may support up to three sources where one of these sources also acts as the destination, may support up to two sources and one destination).

Modifier field 2346 - its content distinguishes occurrences of instructions in the generic vector instruction format that specify memory access from those that do not; that is, between no memory access 2305 instruction templates and memory access 2320 instruction templates. Memory access operations read and/or write to the memory hierarchy (in some cases specifying the source and/or destination addresses using values in registers), while non-memory access operations do not (e.g., the source and destinations are registers). While in one example this field also selects between three different ways to perform memory address calculations, alternative examples may support more, less, or different ways to perform memory address calculations.

Augmentation operation field 2350 - its content distinguishes which one of a variety of different operations to be performed in addition to the base operation. This field is context specific. In one example of the disclosure, this field is divided into a class field 2368, an alpha field 2352, and a beta field 2354. The augmentation operation field 2350 allows common groups of operations to be performed in a single instruction rather than 2, 3, or 4 instructions.

Scale field 2360 - its content allows for the scaling of the index field's content for memory address generation (e.g., for address generation that uses 2^{scale} * index + base).

Displacement Field 2362A- its content is used as part of memory address generation (e.g., for address generation that uses 2^{scale} * index + base + displacement).

Displacement Factor Field 2362B (note that the juxtaposition of displacement field 2362A directly over displacement factor field 2362B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 2374 (described later herein) and the data manipulation field 2354C. The displacement field 2362A and the displacement factor field 2362B are optional in the sense that they are not used for the no memory access 2305 instruction templates and/or different examples may implement only one or none of the two.

Data element width field 2364 - its content distinguishes which one of a number of data element widths is to be used (in some examples for all instructions; in other examples for only some of the instructions). This field is optional in the sense that it is not needed if only one data element width is supported and/or data element widths are supported using some aspect of the opcodes.

Write mask field 2370 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 2370 allows for partial vector operations, including loads, stores, arithmetic, logical, etc. While examples of the disclosure are described in which the write mask field's 2370 content selects one of a number of write mask registers that contains the write mask to be used (and thus the write mask field's 2370 content indirectly identifies that masking to be performed), alternative examples instead or additional allow the mask write field's 2370 content to directly specify the masking to be performed.

Immediate field 2372 - its content allows for the specification of an immediate. This field is optional in the sense that is it not present in an implementation of the generic vector friendly format that does not support immediate and it is not present in instructions that do not use an immediate.

Class field 2368 - its content distinguishes between different classes of instructions. With reference to **Figures 23A-B****,** the contents of this field select between class A and class B instructions. In **Figures 23A-B****,** rounded corner squares are used to indicate a specific value is present in a field (e.g., class A 2368A and class B 2368B for the class field 2368 respectively in **Figures 23A-B****).**

### Instruction Templates of Class A

In the case of the non-memory access 2305 instruction templates of class A, the alpha field 2352 is interpreted as an RS field 2352A, whose content distinguishes which one of the different augmentation operation types are to be performed (e.g., round 2352A.1 and data transform 2352A.2 are respectively specified for the no memory access, round type operation 2310 and the no memory access, data transform type operation 2315 instruction templates), while the beta field 2354 distinguishes which of the operations of the specified type is to be performed. In the no memory access 2305 instruction templates, the scale field 2360, the displacement field 2362A, and the displacement scale filed 2362B are not present.

### No-Memory Access Instruction Templates - Full Round Control Type Operation

In the no memory access full round control type operation 2310 instruction template, the beta field 2354 is interpreted as a round control field 2354A, whose content(s) provide static rounding. While in the described examples of the disclosure the round control field 2354A includes a suppress all floating point exceptions (SAE) field 2356 and a round operation control field 2358, alternative examples may support may encode both these concepts into the same field or only have one or the other of these concepts/fields (e.g., may have only the round operation control field 2358).

SAE field 2356 - its content distinguishes whether or not to disable the exception event reporting; when the SAE field's 2356 content indicates suppression is enabled, a given instruction does not report any kind of floating-point exception flag and does not raise any floating point exception handler.

Round operation control field 2358 - its content distinguishes which one of a group of rounding operations to perform (e.g., Round-up, Round-down, Round-towards-zero and Round-to-nearest). Thus, the round operation control field 2358 allows for the changing of the rounding mode on a per instruction basis. In one example of the disclosure where a processor includes a control register for specifying rounding modes, the round operation control field's 2350 content overrides that register value.

### No Memory Access Instruction Templates - Data Transform Type Operation

In the no memory access data transform type operation 2315 instruction template, the beta field 2354 is interpreted as a data transform field 2354B, whose content distinguishes which one of a number of data transforms is to be performed (e.g., no data transform, swizzle, broadcast).

In the case of a memory access 2320 instruction template of class A, the alpha field 2352 is interpreted as an eviction hint field 2352B, whose content distinguishes which one of the eviction hints is to be used (in **Figure 23A****,** temporal 2352B.1 and non-temporal 2352B.2 are respectively specified for the memory access, temporal 2325 instruction template and the memory access, non-temporal 2330 instruction template), while the beta field 2354 is interpreted as a data manipulation field 2354C, whose content distinguishes which one of a number of data manipulation operations (also known as primitives) is to be performed (e.g., no manipulation; broadcast; up conversion of a source; and down conversion of a destination). The memory access 2320 instruction templates include the scale field 2360, and optionally the displacement field 2362A or the displacement scale field 2362B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 2352 is interpreted as a write mask control (Z) field 2352C, whose content distinguishes whether the write masking controlled by the write mask field 2370 should be a merging or a zeroing.

In the case of the non-memory access 2305 instruction templates of class B, part of the beta field 2354 is interpreted as an RL field 2357A, whose content distinguishes which one of the different augmentation operation types are to be performed (e.g., round 2357A.1 and vector length (VSIZE) 2357A.2 are respectively specified for the no memory access, write mask control, partial round control type operation 2312 instruction template and the no memory access, write mask control, VSIZE type operation 2317 instruction template), while the rest of the beta field 2354 distinguishes which of the operations of the specified type is to be performed. In the no memory access 2305 instruction templates, the scale field 2360, the displacement field 2362A, and the displacement scale filed 2362B are not present.

In the no memory access, write mask control, partial round control type operation 2310 instruction template, the rest of the beta field 2354 is interpreted as a round operation field 2359A and exception event reporting is disabled (a given instruction does not report any kind of floating-point exception flag and does not raise any floating point exception handler).

Round operation control field 2359A - just as round operation control field 2358, its content distinguishes which one of a group of rounding operations to perform (e.g., Round-up, Round-down, Round-towards-zero and Round-to-nearest). Thus, the round operation control field 2359A allows for the changing of the rounding mode on a per instruction basis. In one example of the disclosure where a processor includes a control register for specifying rounding modes, the round operation control field's 2350 content overrides that register value.

In the no memory access, write mask control, VSIZE type operation 2317 instruction template, the rest of the beta field 2354 is interpreted as a vector length field 2359B, whose content distinguishes which one of a number of data vector lengths is to be performed on (e.g., 128, 256, or 512 byte).

In the case of a memory access 2320 instruction template of class B, part of the beta field 2354 is interpreted as a broadcast field 2357B, whose content distinguishes whether or not the broadcast type data manipulation operation is to be performed, while the rest of the beta field 2354 is interpreted the vector length field 2359B. The memory access 2320 instruction templates include the scale field 2360, and optionally the displacement field 2362A or the displacement scale field 2362B.

With regard to the generic vector friendly instruction format 2300, a full opcode field 2374 is shown including the format field 2340, the base operation field 2342, and the data element width field 2364. While one example is shown where the full opcode field 2374 includes all of these fields, the full opcode field 2374 includes less than all of these fields in examples that do not support all of them. The full opcode field 2374 provides the operation code (opcode).

The augmentation operation field 2350, the data element width field 2364, and the write mask field 2370 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some examples of the disclosure, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the disclosure). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different examples of the disclosure. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

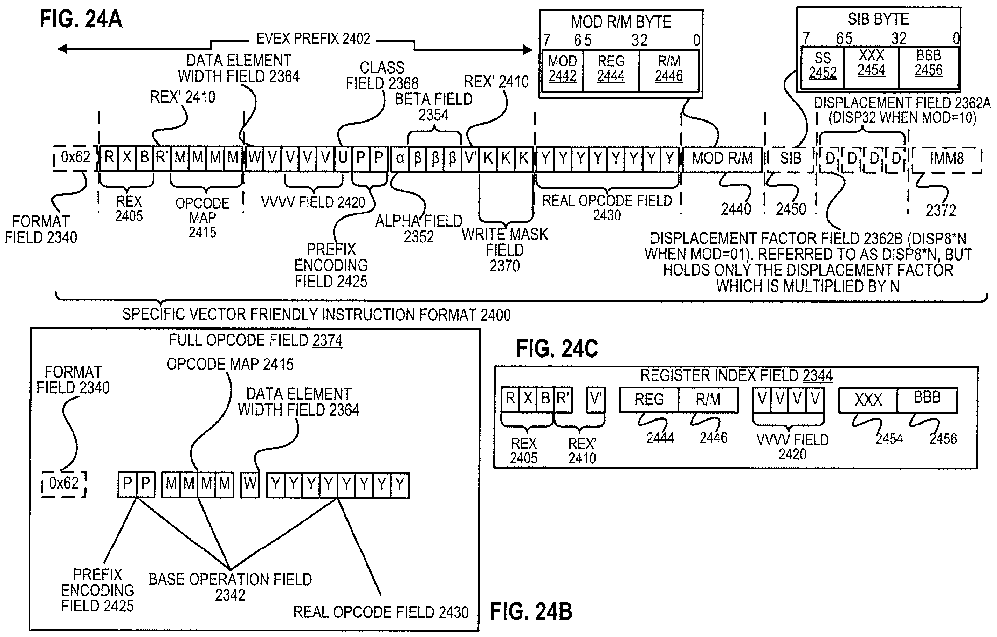

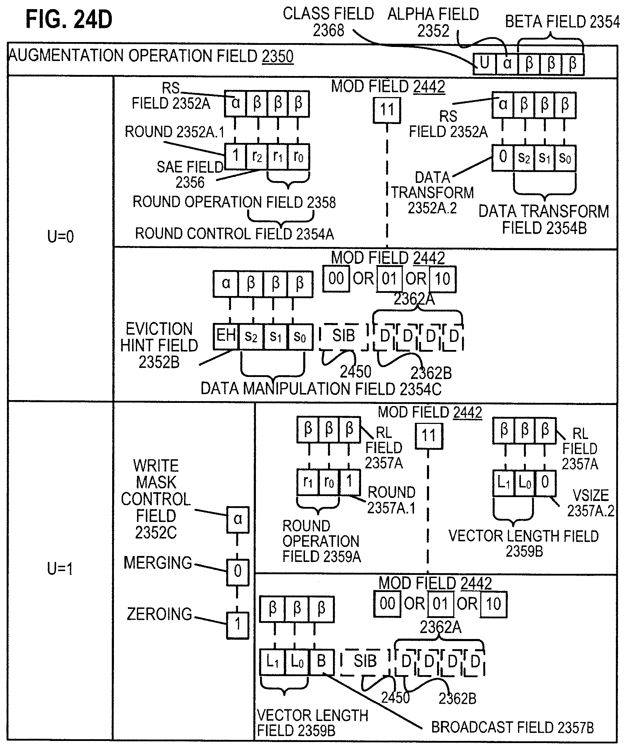

**Figure 24** is a block diagram illustrating an exemplary specific vector friendly instruction format according to examples of the disclosure. **Figure 24** shows a specific vector friendly instruction format 2400 that is specific in the sense that it specifies the location, size, interpretation, and order of the fields, as well as values for some of those fields. The specific vector friendly instruction format 2400 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 23** into which the fields from **Figure 24** map are illustrated.

It should be understood that, although examples of the disclosure are described with reference to the specific vector friendly instruction format 2400 in the context of the generic vector friendly instruction format 2300 for illustrative purposes, the disclosure is not limited to the specific vector friendly instruction format 2400 except where claimed. For example, the generic vector friendly instruction format 2300 contemplates a variety of possible sizes for the various fields, while the specific vector friendly instruction format 2400 is shown as having fields of specific sizes. By way of specific example, while the data element width field 2364 is illustrated as a one bit field in the specific vector friendly instruction format 2400, the disclosure is not so limited (that is, the generic vector friendly instruction format 2300 contemplates other sizes of the data element width field 2364).

The generic vector friendly instruction format 2300 includes the following fields listed below in the order illustrated in **Figure 24A****.**

EVEX Prefix (Bytes 0-3) 2402 - is encoded in a four-byte form.

Format Field 2340 (EVEX Byte 0, bits [7:0]) - the first byte (EVEX Byte 0) is the format field 2340 and it contains 0x62 (the unique value used for distinguishing the vector friendly instruction format in one example of the disclosure).

The second-fourth bytes (EVEX Bytes 1-3) include a number of bit fields providing specific capability.

REX field 2405 (EVEX Byte 1, bits [7-5]) - consists of an EVEX.R bit field (EVEX Byte 1, bit [7] - R), EVEX.X bit field (EVEX byte 1, bit [6] - X), and 2357BEX byte 1, bit[5] - B). The EVEX.R, EVEX.X, and EVEX.B bit fields provide the same functionality as the corresponding VEX bit fields, and are encoded using 1s complement form, e.g., ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 2310 - this is the first part of the REX' field 2310 and is the EVEX.R' bit field (EVEX Byte 1, bit [4] - R') that is used to encode either the upper 16 or lower 16 of the extended 32 register set. In one example of the disclosure, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative examples of the disclosure do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 2415 (EVEX byte 1, bits [3:0] - mmmm) - its content encodes an implied leading opcode byte (0F, 0F 38, or 0F 3).

Data element width field 2364 (EVEX byte 2, bit [7] - W) - is represented by the notation EVEX.W. EVEX.W is used to define the granularity (size) of the datatype (either 32-bit data elements or 64-bit data elements).

EVEX.vvvv 2420 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 2420 encodes the 4 low-order bits of the first source register specifier stored in inverted (1s complement) form. Depending on the instruction, an extra different EVEX bit field is used to extend the specifier size to 32 registers.

EVEX.U 2368 Class field (EVEX byte 2, bit [2]-U) - If EVEX.U = 0, it indicates class A or EVEX.U0; if EVEX.U = 1, it indicates class B or EVEX.U1.

Prefix encoding field 2425 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one example, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain examples expand in a similar fashion for consistency but allow for different meanings to be specified by these legacy SIMD prefixes. An alternative example may redesign the PLA to support the 2 bit SIMD prefix encodings, and thus not require the expansion.

Alpha field 2352 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 2354 (EVEX byte 3, bits [6:4]-SSS, also known as EVEX.s₂₋₀, EVEX.r₂₋₀, EVEX.rr1, EVEX.LL0, EVEX.LLB; also illustrated with βββ) - as previously described, this field is context specific.

REX' field 2310 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 2370 (EVEX byte 3, bits [2:0]-kkk) - its content specifies the index of a register in the write mask registers as previously described. In one example of the disclosure, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 2430 (Byte 4) is also known as the opcode byte. Part of the opcode is specified in this field.

MOD R/M Field 2440 (Byte 5) includes MOD field 2442, Reg field 2444, and R/M field 2446. As previously described, the MOD field's 2442 content distinguishes between memory access and non-memory access operations. The role of Reg field 2444 can be summarized to two situations: encoding either the destination register operand or a source register operand, or be treated as an opcode extension and not used to encode any instruction operand. The role of R/M field 2446 may include the following: encoding the instruction operand that references a memory address, or encoding either the destination register operand or a source register operand.

Scale, Index, Base (SIB) Byte (Byte 6) - As previously described, the scale field's 2350 content is used for memory address generation. SIB.xxx 2454 and SIB.bbb 2456 - the contents of these fields have been previously referred to with regard to the register indexes Xxxx and Bbbb.

Displacement field 2362A (Bytes 7-10) - when MOD field 2442 contains 10, bytes 7-10 are the displacement field 2362A, and it works the same as the legacy 32-bit displacement (disp32) and works at byte granularity.

Displacement factor field 2362B (Byte 7) - when MOD field 2442 contains 01, byte 7 is the displacement factor field 2362B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 2362B is a reinterpretation of disp8; when using displacement factor field 2362B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 2362B substitutes the legacy x86 instruction set 8-bit displacement. Thus, the displacement factor field 2362B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 2372 operates as previously described.

### Full Opcode Field

**Figure 24B** is a block diagram illustrating the fields of the specific vector friendly instruction format 2400 that make up the full opcode field 2374 according to one example of the disclosure. Specifically, the full opcode field 2374 includes the format field 2340, the base operation field 2342, and the data element width (W) field 2364. The base operation field 2342 includes the prefix encoding field 2425, the opcode map field 2415, and the real opcode field 2430.

### Register Index Field

**Figure 24C** is a block diagram illustrating the fields of the specific vector friendly instruction format 2400 that make up the register index field 2344 according to one example of the disclosure. Specifically, the register index field 2344 includes the REX field 2405, the REX' field 2410, the MODR/M.reg field 2444, the MODR/M.r/m field 2446, the VVVV field 2420, xxx field 2454, and the bbb field 2456.

### Augmentation Operation Field

**Figure 24D** is a block diagram illustrating the fields of the specific vector friendly instruction format 2400 that make up the augmentation operation field 2350 according to one example of the disclosure. When the class (U) field 2368 contains 0, it signifies EVEX.U0 (class A 2368A); when it contains 1, it signifies EVEX.U1 (class B 2368B). When U=0 and the MOD field 2442 contains 11 (signifying a no memory access operation), the alpha field 2352 (EVEX byte 3, bit [7] - EH) is interpreted as the rs field 2352A. When the rs field 2352A contains a 1 (round 2352A.1), the beta field 2354 (EVEX byte 3, bits [6:4]- SSS) is interpreted as the round control field 2354A. The round control field 2354A includes a one bit SAE field 2356 and a two bit round operation field 2358. When the rs field 2352A contains a 0 (data transform 2352A.2), the beta field 2354 (EVEX byte 3, bits [6:4]- SSS) is interpreted as a three bit data transform field 2354B. When U=0 and the MOD field 2442 contains 00, 01, or 10 (signifying a memory access operation), the alpha field 2352 (EVEX byte 3, bit [7] - EH) is interpreted as the eviction hint (EH) field 2352B and the beta field 2354 (EVEX byte 3, bits [6:4]- SSS) is interpreted as a three bit data manipulation field 2354C.

When U=1, the alpha field 2352 (EVEX byte 3, bit [7] - EH) is interpreted as the write mask control (Z) field 2352C. When U=1 and the MOD field 2442 contains 11 (signifying a no memory access operation), part of the beta field 2354 (EVEX byte 3, bit [4]- S₀) is interpreted as the RL field 2357A; when it contains a 1 (round 2357A.1) the rest of the beta field 2354 (EVEX byte 3, bit [6-5]- S₂₋₁) is interpreted as the round operation field 2359A, while when the RL field 2357A contains a 0 (VSIZE 2357.A2) the rest of the beta field 2354 (EVEX byte 3, bit [6-5]- S₂₋₁) is interpreted as the vector length field 2359B (EVEX byte 3, bit [6-5]- L₁₋₀). When U=1 and the MOD field 2442 contains 00, 01, or 10 (signifying a memory access operation), the beta field 2354 (EVEX byte 3, bits [6:4]- SSS) is interpreted as the vector length field 2359B (EVEX byte 3, bit [6-5]- L₁₋₀) and the broadcast field 2357B (EVEX byte 3, bit [4]- B).

### Exemplary Register Architecture

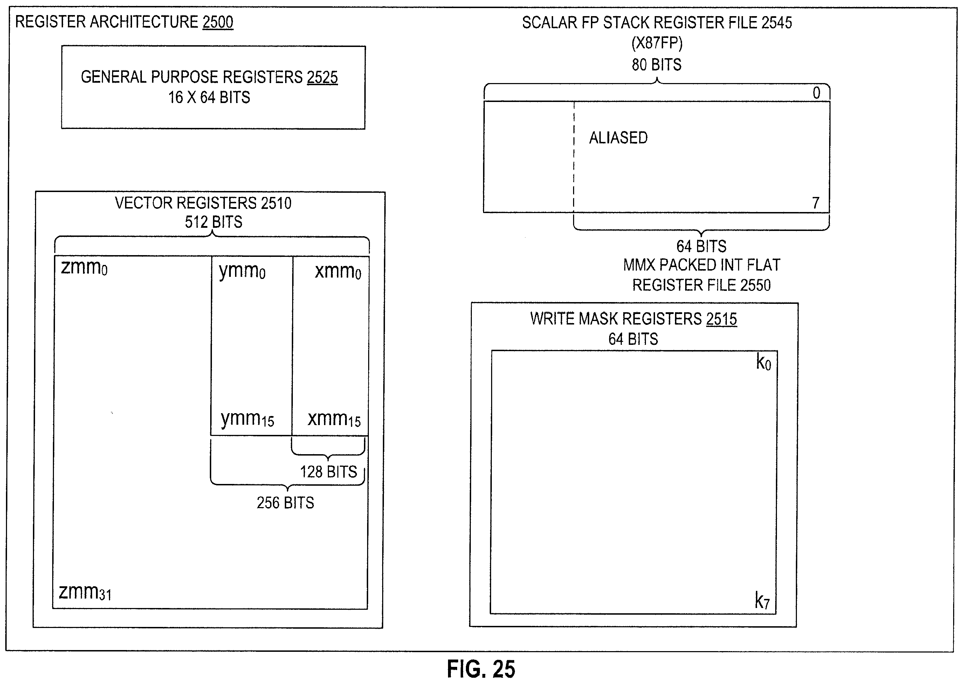

**Figure 25** is a block diagram of a register architecture 2500 according to one example of the disclosure. In the example illustrated, there are 32 vector registers 2510 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 2400 operates on these overlaid register file as illustrated in the below tables.

| Adjustable Vector Length | Class | Operations | Registers |
|---|---|---|---|
| Instruction Templates that do not include the vector length field 2359B | A (Figure 23A; U=0) | 2310, 2315, 2325, 2330 | zmm registers (the vector length is 64 byte) |
| | B (Figure 23B; U=1) | 2312 | zmm registers (the vector length is 64 byte) |
| Instruction templates that do include the vector length field 2359B | B (Figure 23B; U=1) | 2317, 2327 | zmm, ymm, or xmm registers (the vector length is 64 byte, 32 byte, or 16 byte) depending on the vector length field 2359B |

In other words, the vector length field 2359B selects between a maximum length and one or more other shorter lengths, where each such shorter length is half the length of the preceding length; and instructions templates without the vector length field 2359B operate on the maximum vector length. Further, in one example, the class B instruction templates of the specific vector friendly instruction format 2400 operate on packed or scalar single/double-precision floating point data and packed or scalar integer data. Scalar operations are operations performed on the lowest order data element position in a zmm/ymm/xmm register; the higher order data element positions are either left the same as they were prior to the instruction or zeroed depending on the example.

Write mask registers 2515 - in the example illustrated, there are 8 write mask registers (k0 through k7), each 64 bits in size. In an alternate example, the write mask registers 2515 are 16 bits in size. As previously described, in one example of the disclosure, the vector mask register k0 cannot be used as a write mask; when the encoding that would normally indicate k0 is used for a write mask, it selects a hardwired write mask of 0xFFFF, effectively disabling write masking for that instruction.

General-purpose registers 2525 - in the example illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 2545, on which is aliased the MMX packed integer flat register file 2550 - in the example illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative examples of the disclosure may use wider or narrower registers. Additionally, alternative examples of the disclosure may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

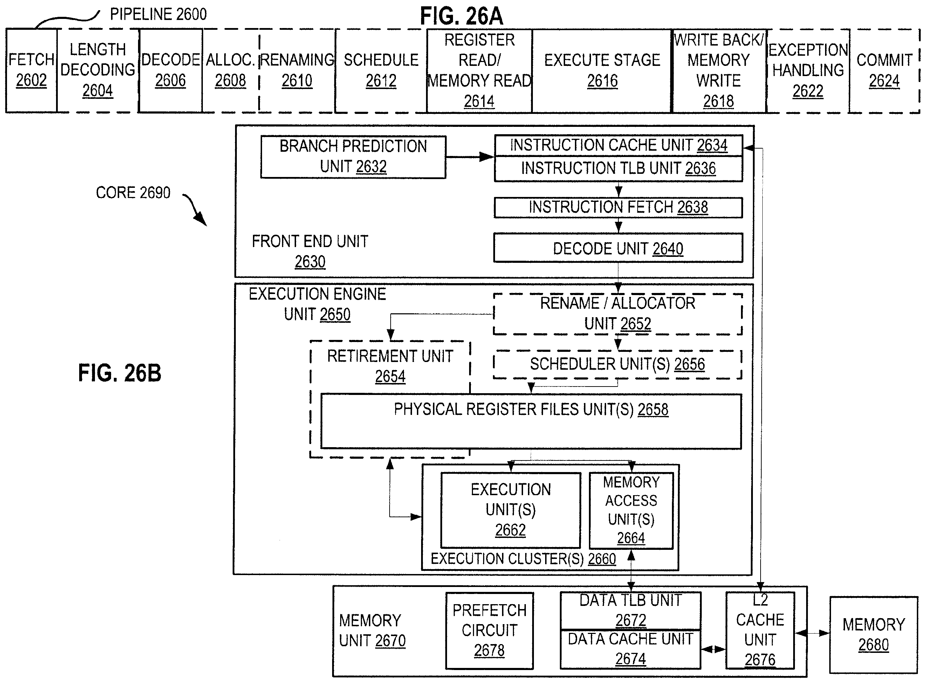

**Figure 26A** is a block diagram illustrating both an exemplary in-order pipeline and an exemplary register renaming, out-of-order issue/execution pipeline according to examples of the disclosure. Figure 26B is a block diagram illustrating both an exemplary example of an in-order architecture core and an exemplary register renaming, out-of-order issue/execution architecture core to be included in a processor according to examples of the disclosure. The solid lined boxes in **Figures 26A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 26A****,** a processor pipeline 2600 includes a fetch stage 2602, a length decode stage 2604, a decode stage 2606, an allocation stage 2608, a renaming stage 2610, a scheduling (also known as a dispatch or issue) stage 2612, a register read/memory read stage 2614, an execute stage 2616, a write back/memory write stage 2618, an exception handling stage 2622, and a commit stage 2624.

**Figure 26B** shows processor core 2690 including a front end unit 2630 coupled to an execution engine unit 2650, and both are coupled to a memory unit 2670. The core 2690 may be a reduced instruction set computing (RISC) core, a complex instruction set computing (CISC) core, a very long instruction word (VLIW) core, or a hybrid or alternative core type. As yet another option, the core 2690 may be a special-purpose core, such as, for example, a network or communication core, compression engine, coprocessor core, general purpose computing graphics processing unit (GPGPU) core, graphics core, or the like.

The front end unit 2630 includes a branch prediction unit 2632 coupled to an instruction cache unit 2634, which is coupled to an instruction translation lookaside buffer (TLB) 2636, which is coupled to an instruction fetch unit 2638, which is coupled to a decode unit 2640. The decode unit 2640 (or decoder or decoder unit) may decode instructions (e.g., macro-instructions), and generate as an output one or more micro-operations, micro-code entry points, micro-instructions, other instructions, or other control signals, which are decoded from, or which otherwise reflect, or are derived from, the original instructions. The decode unit 2640 may be implemented using various different mechanisms. Examples of suitable mechanisms include, but are not limited to, look-up tables, hardware implementations, programmable logic arrays (PLAs), microcode read only memories (ROMs), etc. In one example, the core 2690 includes a microcode ROM or other medium that stores microcode for certain macro-instructions (e.g., in decode unit 2640 or otherwise within the front end unit 2630). The decode unit 2640 is coupled to a rename/allocator unit 2652 in the execution engine unit 2650.

The execution engine unit 2650 includes the rename/allocator unit 2652 coupled to a retirement unit 2654 and a set of one or more scheduler unit(s) 2656. The scheduler unit(s) 2656 represents any number of different schedulers, including reservations stations, central instruction window, etc. The scheduler unit(s) 2656 is coupled to the physical register file(s) unit(s) 2658. Each of the physical register file(s) units 2658 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one example, the physical register file(s) unit 2658 comprises a vector registers unit, a write mask registers unit, and a scalar registers unit. These register units may provide architectural vector registers, vector mask registers, and general purpose registers. The physical register file(s) unit(s) 2658 is overlapped by the retirement unit 2654 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 2654 and the physical register file(s) unit(s) 2658 are coupled to the execution cluster(s) 2660. The execution cluster(s) 2660 includes a set of one or more execution units 2662 and a set of one or more memory access units 2664. The execution units 2662 may perform various operations (e.g., shifts, addition, subtraction, multiplication) and on various types of data (e.g., scalar floating point, packed integer, packed floating point, vector integer, vector floating point). While some examples may include a number of execution units dedicated to specific functions or sets of functions, other examples may include only one execution unit or multiple execution units that all perform all functions. The scheduler unit(s) 2656, physical register file(s) unit(s) 2658, and execution cluster(s) 2660 are shown as being possibly plural because certain examples create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain examples are implemented in which only the execution cluster of this pipeline has the memory access unit(s) 2664). It should also be understood that where separate pipelines are used, one or more of these pipelines may be out-of-order issue/execution and the rest in-order.

The set of memory access units 2664 is coupled to the memory unit 2670, which includes a data TLB unit 2672 coupled to a data cache unit 2674 coupled to a level 2 (L2) cache unit 2676. In one exemplary example, the memory access units 2664 may include a load unit, a store address unit, and a store data unit, each of which is coupled to the data TLB unit 2672 in the memory unit 2670. The instruction cache unit 2634 is further coupled to a level 2 (L2) cache unit 2676 in the memory unit 2670. The L2 cache unit 2676 is coupled to one or more other levels of cache and eventually to a main memory.

In certain examples, a prefetch circuit 2678 is included to prefetch data, for example, to predict access addresses and bring the data for those addresses into a cache or caches (e.g., from memory 2680).

By way of example, the exemplary register renaming, out-of-order issue/execution core architecture may implement the pipeline 2600 as follows: 1) the instruction fetch 2638 performs the fetch and length decoding stages 2602 and 2604; 2) the decode unit 2640 performs the decode stage 2606; 3) the rename/allocator unit 2652 performs the allocation stage 2608 and renaming stage 2610; 4) the scheduler unit(s) 2656 performs the schedule stage 2612; 5) the physical register file(s) unit(s) 2658 and the memory unit 2670 perform the register read/memory read stage 2614; the execution cluster 2660 perform the execute stage 2616; 6) the memory unit 2670 and the physical register file(s) unit(s) 2658 perform the write back/memory write stage 2618; 7) various units may be involved in the exception handling stage 2622; and 8) the retirement unit 2654 and the physical register file(s) unit(s) 2658 perform the commit stage 2624.

The core 2690 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one example, the core 2690 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyper-Threading technology).

While register renaming is described in the context of out-of-order execution, it should be understood that register renaming may be used in an in-order architecture. While the illustrated example of the processor also includes separate instruction and data cache units 2634/2674 and a shared L2 cache unit 2676, alternative examples may have a single internal cache for both instructions and data, such as, for example, a Level 1 (L1) internal cache, or multiple levels of internal cache. In some examples, the system may include a combination of an internal cache and an external cache that is external to the core and/or the processor. Alternatively, all of the cache may be external to the core and/or the processor.

### Specific Exemplary In-Order Core Architecture

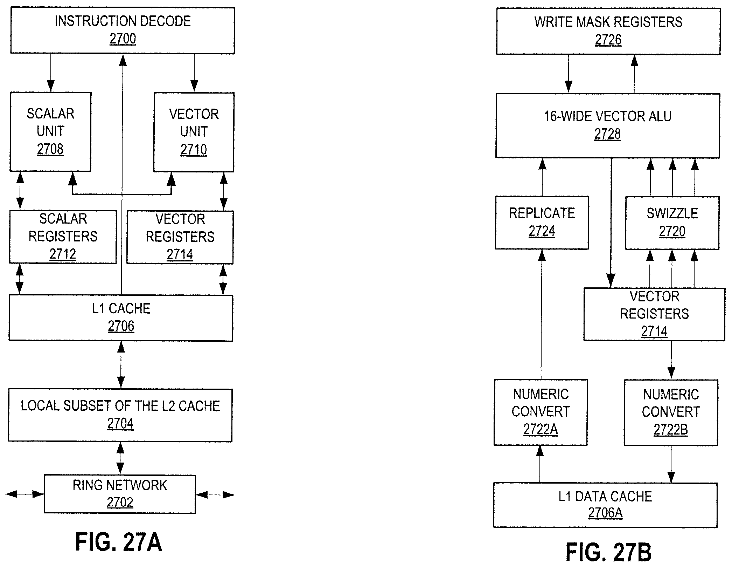

**Figures 27A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory IO interfaces, and other necessary IO logic, depending on the application.

**Figure 27A** is a block diagram of a single processor core, along with its connection to the on-die interconnect network 2702 and with its local subset of the Level 2 (L2) cache 2704, according to examples of the disclosure. In one example, an instruction decode unit 2700 supports the x86 instruction set with a packed data instruction set extension. An L1 cache 2706 allows low-latency accesses to cache memory into the scalar and vector units. While in one example (to simplify the design), a scalar unit 2708 and a vector unit 2710 use separate register sets (respectively, scalar registers 2712 and vector registers 2714) and data transferred between them is written to memory and then read back in from a level 1 (L1) cache 2706, alternative examples of the disclosure may use a different approach (e.g., use a single register set or include a communication path that allow data to be transferred between the two register files without being written and read back).

The local subset of the L2 cache 2704 is part of a global L2 cache that is divided into separate local subsets, one per processor core. Each processor core has a direct access path to its own local subset of the L2 cache 2704. Data read by a processor core is stored in its L2 cache subset 2704 and can be accessed quickly, in parallel with other processor cores accessing their own local L2 cache subsets. Data written by a processor core is stored in its own L2 cache subset 2704 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 27B** is an expanded view of part of the processor core in **Figure 27A** according to examples of the disclosure. **Figure 27B** includes an L1 data cache 2706A part of the L1 cache 2704, as well as more detail regarding the vector unit 2710 and the vector registers 2714. Specifically, the vector unit 2710 is a 16-wide vector processing unit (VPU) (see the 16-wide ALU 2728), which executes one or more of integer, single-precision float, and double-precision float instructions. The VPU supports swizzling the register inputs with swizzle unit 2720, numeric conversion with numeric convert units 2722A-B, and replication with replication unit 2724 on the memory input. Write mask registers 2726 allow predicating resulting vector writes.

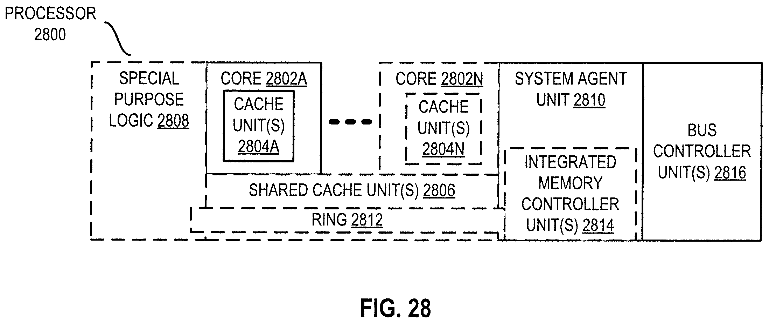

**Figure 28** is a block diagram of a processor 2800 that may have more than one core, may have an integrated memory controller, and may have integrated graphics according to examples of the disclosure. The solid lined boxes in **Figure 28** illustrate a processor 2800 with a single core 2802A, a system agent 2810, a set of one or more bus controller units 2816, while the optional addition of the dashed lined boxes illustrates an alternative processor 2800 with multiple cores 2802A-N, a set of one or more integrated memory controller unit(s) 2814 in the system agent unit 2810, and special purpose logic 2808.

Thus, different implementations of the processor 2800 may include: 1) a CPU with the special purpose logic 2808 being integrated graphics and/or scientific (throughput) logic (which may include one or more cores), and the cores 2802A-N being one or more general purpose cores (e.g., general purpose in-order cores, general purpose out-of-order cores, a combination of the two); 2) a coprocessor with the cores 2802A-N being a large number of special purpose cores intended primarily for graphics and/or scientific (throughput); and 3) a coprocessor with the cores 2802A-N being a large number of general purpose in-order cores. Thus, the processor 2800 may be a general-purpose processor, coprocessor, or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 2800 may be a part of and/or may be implemented on one or more substrates using any of a number of process technologies, such as, for example, BiCMOS, CMOS, or NMOS.

The memory hierarchy includes one or more levels of cache 2804A-2804N within the cores, a set or one or more shared cache units 2806, and external memory (not shown) coupled to the set of integrated memory controller units 2814. The set of shared cache units 2806 may include one or more mid-level caches, such as level 2 (L2), level 3 (L3), level 4 (L4), or other levels of cache, a last level cache (LLC), and/or combinations thereof. While in one example a ring based interconnect unit 2812 interconnects the integrated graphics logic 2808, the set of shared cache units 2806, and the system agent unit 2810/integrated memory controller unit(s) 2814, alternative examples may use any number of well-known techniques for interconnecting such units. In one example, coherency is maintained between one or more cache units 2806 and cores 2802-A-N.

In some examples, one or more of the cores 2802A-N are capable of multi-threading. The system agent 2810 includes those components coordinating and operating cores 2802A-N. The system agent unit 2810 may include for example a power control unit (PCU) and a display unit. The PCU may be or include logic and components needed for regulating the power state of the cores 2802A-N and the integrated graphics logic 2808. The display unit is for driving one or more externally connected displays.

The cores 2802A-N may be homogenous or heterogeneous in terms of architecture instruction set; that is, two or more of the cores 2802A-N may be capable of execution the same instruction set, while others may be capable of executing only a subset of that instruction set or a different instruction set.

### Exemplary Computer Architectures

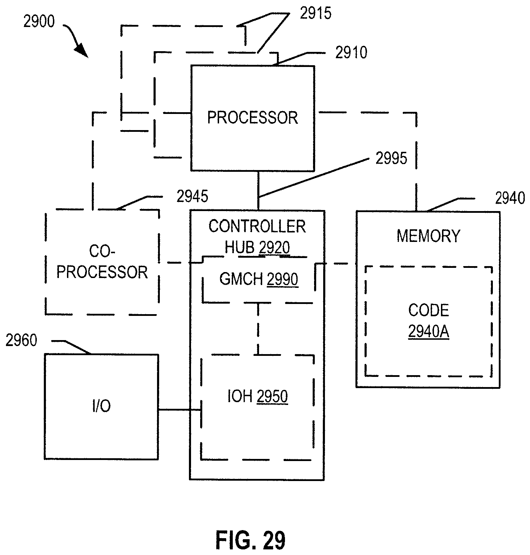

**Figures 29-32** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, handheld devices, and various other electronic devices, are also suitable. In general, a huge variety of systems or electronic devices capable of incorporating a processor and/or other execution logic as disclosed herein are generally suitable.

Referring now to **Figure 29****,** shown is a block diagram of a system 2900 in accordance with one example of the present disclosure. The system 2900 may include one or more processors 2910, 2915, which are coupled to a controller hub 2920. In one example the controller hub 2920 includes a graphics memory controller hub (GMCH) 2990 and an Input/Output Hub (IOH) 2950 (which may be on separate chips); the GMCH 2990 includes memory and graphics controllers to which are coupled memory 2940 and a coprocessor 2945; the IOH 2950 couples input/output (IO) devices 2960 to the GMCH 2990. Alternatively, one or both of the memory and graphics controllers are integrated within the processor (as described herein), the memory 2940 and the coprocessor 2945 are coupled directly to the processor 2910, and the controller hub 2920 in a single chip with the IOH 2950. Memory 2940 may include code 2940A, for example, that when executed causes a processor to perform any method of this disclosure.

The optional nature of additional processors 2915 is denoted in **Figure 29** with broken lines. Each processor 2910, 2915 may include one or more of the processing cores described herein and may be some version of the processor 2800.

The memory 2940 may be, for example, dynamic random access memory (DRAM), phase change memory (PCM), or a combination of the two. For at least one example, the controller hub 2920 communicates with the processor(s) 2910, 2915 via a multi-drop bus, such as a frontside bus (FSB), point-to-point interface such as Quickpath Interconnect (QPI), or similar connection 2995.

In one example, the coprocessor 2945 is a special-purpose processor, such as, for example, a high-throughput MIC processor, a network or communication processor, compression engine, graphics processor, GPGPU, embedded processor, or the like. In one example, controller hub 2920 may include an integrated graphics accelerator.

There can be a variety of differences between the physical resources 2910, 2915 in terms of a spectrum of metrics of merit including architectural, microarchitectural, thermal, power consumption characteristics, and the like.

In one example, the processor 2910 executes instructions that control data processing operations of a general type. Embedded within the instructions may be coprocessor instructions. The processor 2910 recognizes these coprocessor instructions as being of a type that should be executed by the attached coprocessor 2945. Accordingly, the processor 2910 issues these coprocessor instructions (or control signals representing coprocessor instructions) on a coprocessor bus or other interconnect, to coprocessor 2945. Coprocessor(s) 2945 accept and execute the received coprocessor instructions.

Referring now to **Figure 30****,** shown is a block diagram of a first more specific exemplary system 3000 in accordance with an example of the present disclosure. As shown in **Figure 30****,** multiprocessor system 3000 is a point-to-point interconnect system, and includes a first processor 3070 and a second processor 3080 coupled via a point-to-point interconnect 3050. Each of processors 3070 and 3080 may be some version of the processor 2800. In one example of the disclosure, processors 3070 and 3080 are respectively processors 2910 and 2915, while coprocessor 3038 is coprocessor 2945. In another example, processors 3070 and 3080 are respectively processor 2910 coprocessor 2945.

Processors 3070 and 3080 are shown including integrated memory controller (IMC) units 3072 and 3082, respectively. Processor 3070 also includes as part of its bus controller units point-to-point (P-P) interfaces 3076 and 3078; similarly, second processor 3080 includes P-P interfaces 3086 and 3088. Processors 3070, 3080 may exchange information via a point-to-point (P-P) interface 3050 using P-P interface circuits 3078, 3088. As shown in **Figure 30****,** IMCs 3072 and 3082 couple the processors to respective memories, namely a memory 3032 and a memory 3034, which may be portions of main memory locally attached to the respective processors.

Processors 3070, 3080 may each exchange information with a chipset 3090 via individual P-P interfaces 3052, 3054 using point to point interface circuits 3076, 3094, 3086, 3098. Chipset 3090 may optionally exchange information with the coprocessor 3038 via a high-performance interface 3039. In one example, the coprocessor 3038 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 3090 may be coupled to a first bus 3016 via an interface 3096. In one example, first bus 3016 may be a Peripheral Component Interconnect (PCI) bus, or a bus such as a PCI Express bus or another third generation IO interconnect bus, although the scope of the present disclosure is not so limited.

As shown in **Figure 30****,** various IO devices 3014 may be coupled to first bus 3016, along with a bus bridge 3018 which couples first bus 3016 to a second bus 3020. In one example, one or more additional processor(s) 3015, such as coprocessors, high-throughput MIC processors, GPGPU's, accelerators (such as, e.g., graphics accelerators or digital signal processing (DSP) units), field programmable gate arrays, or any other processor, are coupled to first bus 3016. In one example, second bus 3020 may be a low pin count (LPC) bus. Various devices may be coupled to a second bus 3020 including, for example, a keyboard and/or mouse 3022, communication devices 3027 and a storage unit 3028 such as a disk drive or other mass storage device which may include instructions/code and data 3030, in one example. Further, an audio IO 3024 may be coupled to the second bus 3020. Note that other architectures are possible. For example, instead of the point-to-point architecture of Figure 30, a system may implement a multi-drop bus or other such architecture.

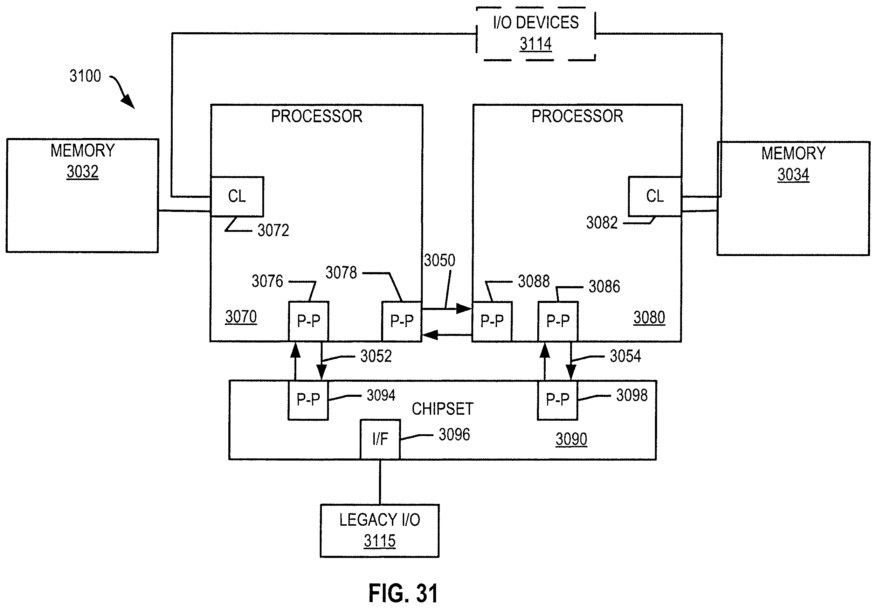

Referring now to **Figure 31****,** shown is a block diagram of a second more specific exemplary system 3100 in accordance with an example of the present disclosure. Like elements in **Figures 30** **and** **31** bear like reference numerals, and certain aspects of **Figure 30** have been omitted from **Figure 31** in order to avoid obscuring other aspects of **Figure 31****.**

**Figure 31** illustrates that the processors 3070, 3080 may include integrated memory and IO control logic ("CL") 3072 and 3082, respectively. Thus, the CL 3072, 3082 include integrated memory controller units and include IO control logic. **Figure 31** illustrates that not only are the memories 3032, 3034 coupled to the CL 3072, 3082, but also that IO devices 3114 are also coupled to the control logic 3072, 3082. Legacy IO devices 3115 are coupled to the chipset 3090.

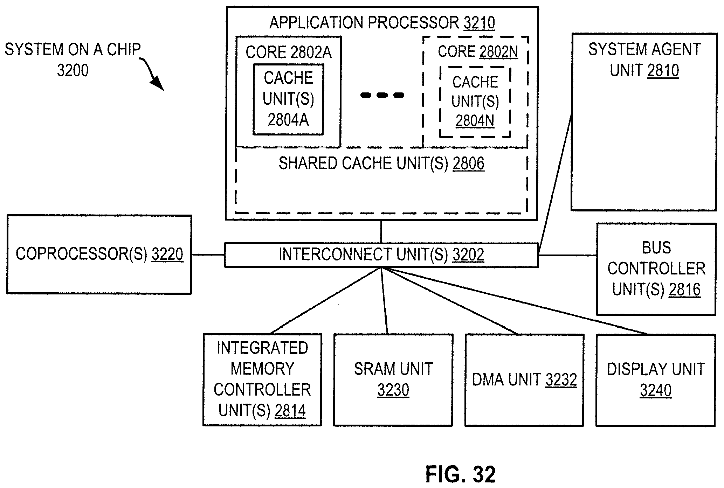

Referring now to **Figure 32****,** shown is a block diagram of a SoC 3200 in accordance with an example of the present disclosure. Similar elements in **Figure 28** bear like reference numerals. Also, dashed lined boxes are optional features on more advanced SoCs. In **Figure 32****,** an interconnect unit(s) 3202 is coupled to: an application processor 3210 which includes a set of one or more cores 2802A-N and shared cache unit(s) 2806; a system agent unit 2810; a bus controller unit(s) 2816; an integrated memory controller unit(s) 2814; a set or one or more coprocessors 3220 which may include integrated graphics logic, an image processor, an audio processor, and a video processor; an static random access memory (SRAM) unit 3230; a direct memory access (DMA) unit 3232; and a display unit 3240 for coupling to one or more external displays. In one example, the coprocessor(s) 3220 include a special-purpose processor, such as, for example, a network or communication processor, compression engine, GPGPU, a high-throughput MIC processor, embedded processor, or the like.

Examples (e.g., of the mechanisms) disclosed herein may be implemented in hardware, software, firmware, or a combination of such implementation approaches. Examples of the disclosure may be implemented as computer programs or program code executing on programmable systems comprising at least one processor, a storage system (including volatile and non-volatile memory and/or storage elements), at least one input device, and at least one output device.

Program code, such as code 3030 illustrated in **Figure 30****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one example may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples of the disclosure also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

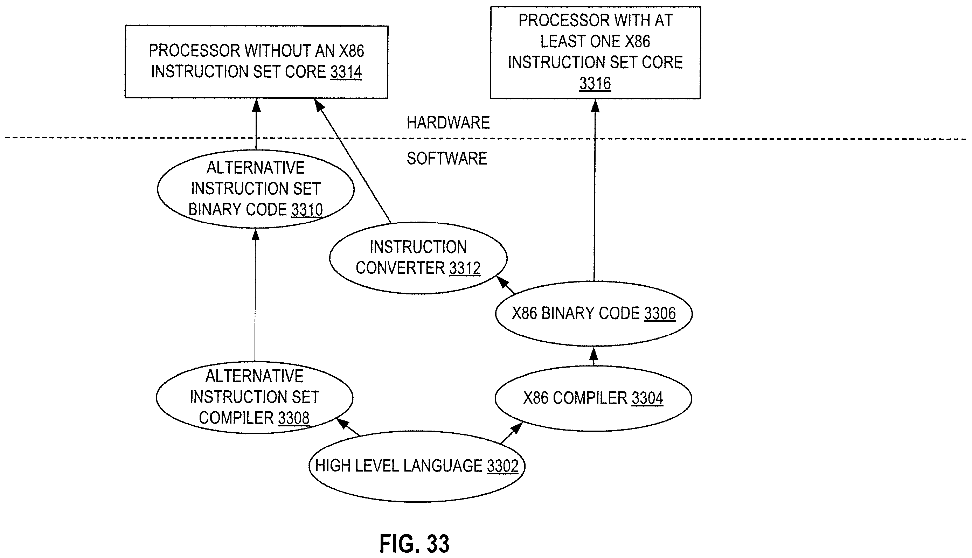

**Figure 33** is a block diagram contrasting the use of a software instruction converter to convert binary instructions in a source instruction set to binary instructions in a target instruction set according to examples of the disclosure. In the illustrated example, the instruction converter is a software instruction converter, although alternatively the instruction converter may be implemented in software, firmware, hardware, or various combinations thereof. **Figure 33** shows a program in a high level language 3302 may be compiled using an x86 compiler 3304 to generate x86 binary code 3306 that may be natively executed by a processor with at least one x86 instruction set core 3316. The processor with at least one x86 instruction set core 3316 represents any processor that can perform substantially the same functions as an Intel^{®} processor with at least one x86 instruction set core by compatibly executing or otherwise processing (1) a substantial portion of the instruction set of the Intel^{®} x86 instruction set core or (2) object code versions of applications or other software targeted to run on an Intel^{®} processor with at least one x86 instruction set core, in order to achieve substantially the same result as an Intel^{®} processor with at least one x86 instruction set core. The x86 compiler 3304 represents a compiler that is operable to generate x86 binary code 3306 (e.g., object code) that can, with or without additional linkage processing, be executed on the processor with at least one x86 instruction set core 3316. Similarly, **Figure 33** shows the program in the high level language 3302 may be compiled using an alternative instruction set compiler 3308 to generate alternative instruction set binary code 3310 that may be natively executed by a processor without at least one x86 instruction set core 3314 (e.g., a processor with cores that execute the MIPS instruction set of MIPS Technologies of Sunnyvale, CA and/or that execute the ARM instruction set of ARM Holdings of Sunnyvale, CA). The instruction converter 3312 is used to convert the x86 binary code 3306 into code that may be natively executed by the processor without an x86 instruction set core 3314. This converted code is not likely to be the same as the alternative instruction set binary code 3310 because an instruction converter capable of this is difficult to make; however, the converted code will accomplish the general operation and be made up of instructions from the alternative instruction set. Thus, the instruction converter 3312 represents software, firmware, hardware, or a combination thereof that, through emulation, simulation, or any other process, allows a processor or other electronic device that does not have an x86 instruction set processor or core to execute the x86 binary code 3306.

## Claims

1. An apparatus comprising:
a hardware processor core (102) comprising a trust domain manager (101) to manage one or more hardware isolated virtual machines as a respective trust domain with a region of protected memory; and
input/output memory management unit ;IOMMU; (120) circuitry coupled between the hardware processor core (102) and an input/output device (106), wherein the IOMMU (120) circuitry is to, for a request from the input/output device (106) for a direct memory access of a protected memory of a trust domain (206), allow the direct memory access in response to a field in the request being set to indicate the input/output device (120) is in a trusted computing base of the trust domain (206);
**characterized in that**
in response to the field in the request being set, the IOMMU (120) circuitry is to access a trusted data structure of virtual address to physical address mappings managed by the trust domain manager (101) and not by a virtual machine monitor (110B) of the one or more hardware isolated virtual machines.

2. The apparatus of claim 1, wherein the field in the request is a set of one or more bits in a prefix according to a Peripheral Component Interconnect Express ;PCIe; standard.

3. The apparatus of claim 1, wherein, in response to the field in the request being set, the IOMMU (120) circuitry is to generate an indication that a physical address of the protected memory of the trust domain (206) is allowed to have a private key of the trust domain (206).

4. The apparatus of claim 1, wherein, in response to the field in the request being set, the IOMMU (120) circuitry is to generate an indication that a physical address of the protected memory of the trust domain (206) is allowed to have a shared key of the trust domain (206) and a virtual machine monitor (110B) of the one or more hardware isolated virtual machines.

5. The apparatus of claim 1, wherein, in response to the field in the request not being set, the IOMMU (120) circuitry is to access a data structure of virtual address to physical address mappings managed by the virtual machine monitor (110B) and not access the trusted data structure of virtual address to physical address mappings managed by the trust domain manager (101).

6. The apparatus of any one of claims 1-5, wherein the trust domain manager (101), and not a virtual machine monitor (10B) of the one or more hardware isolated virtual machines, is permitted to cause an indication of invalidation of one or more blocks of the protected memory of the trust domain (206) to be stored in a trusted invalidation queue.

7. The apparatus of any one of claims 1-6, wherein the IOMMU (120) circuitry comprises a trusted root table pointer register that is accessible by the trust domain manager (101) and not by a virtual machine monitor (110B) of the one or more hardware isolated virtual machines.

8. A method comprising:
managing one or more hardware isolated virtual machines as a respective trust domain (206) with a region of protected memory by a trust domain manager (101) of a hardware processor core (102);
sending a request for a direct memory access of a protected memory of a trust domain (206) from an input/output device to input/output memory management unit ;IOMMU; (120) circuitry coupled between the hardware processor core (102) and the input/output device (106); and
allowing, by the IOMMU (120) circuitry, the direct memory access in response to a field in the request being set to indicate the input/output device is in a trusted computing base of the trust domain (206)
**characterized in that** in response to the field in the request being set, accessing, by the IOMMU (120) circuitry, a trusted data structure of virtual address to physical address mappings managed by the trust domain manager (101) and not by a virtual machine monitor (110B) of the one or more hardware isolated virtual machines.

9. The method of claim 8, wherein the field in the request is a set of one or more bits in a prefix according to a Peripheral Component Interconnect Express ;PCIe; standard.

10. The method of claim 8, further comprising, in response to the field in the request being set, generating, by the IOMMU (120) circuitry, an indication that a physical address of the protected memory of the trust domain (206) is allowed to have a private key of the trust domain (206).

11. The method of claim 8, further comprising, in response to the field in the request being set, generating, by the IOMMU (120) circuitry, an indication that a physical address of the protected memory of the trust domain (206) is allowed to have a shared key of the trust domain (206) and a virtual machine monitor (110B).

12. The method of claim 8, further comprising, in response to the field in the request not being set, accessing, by the IOMMU (120) circuitry, a data structure of virtual address to physical address mappings managed by the virtual machine monitor (110B) and not accessing, by the input/output translation lookaside buffer, the trusted data structure of virtual address to physical address mappings managed by the trust domain manager (101).

13. The method of any one of claims 8-12, further comprising, permitting the trust domain manager (101), and not a virtual machine monitor (110B) of the one or more hardware isolated virtual machines, to store an indication of invalidation of one or more blocks of the private memory of the trust domain (206) in a trusted invalidation queue.

## Patentansprüche

1. Einrichtung, umfassend:
einen Hardwareprozessorkern (102), der einen Vertrauensdomänenmanager (101) umfasst, um eine oder mehrere hardwareisolierte virtuelle Maschinen als eine jeweilige Vertrauensdomäne mit einem Gebiet eines geschützten Speichers zu verwalten; und
eine Schaltung einer Eingabe/Ausgabe-Speicherverwaltungseinheit, IOMMU-Schaltung, (120), die zwischen den Hardwareprozessorkern (102) und eine Eingabe/Ausgabe-Vorrichtung (106) gekoppelt ist, wobei die IOMMU-Schaltung (120) bei einer Anforderung von der Eingabe/Ausgabe-Vorrichtung (106) für einen direkten Speicherzugriff eines geschützten Speichers einer Vertrauensdomäne (206) geeignet ist, den direkten Speicherzugriff als Reaktion darauf zu erlauben, dass ein Feld in der Anforderung gesetzt ist, um anzuzeigen, dass sich die Eingabe/Ausgabe-Vorrichtung (120) in einer vertrauenswürdigen Computerbasis der Vertrauensdomäne (206) befindet;
**dadurch gekennzeichnet, dass**
die IOMMU-Schaltung (120), als Reaktion darauf, dass das Feld in der Anforderung gesetzt ist, geeignet ist, um in einer vertrauenswürdigen Datenstruktur einer virtuellen Adresse auf physische Adresszuordnungen zuzugreifen, die von dem Vertrauensdomänenmanager (101), aber nicht durch eine virtuelle Maschinenüberwachung (110B) der einen oder der mehreren hardwareisolierten virtuellen Maschinen verwaltet werden.

2. Einrichtung nach Anspruch 1, wobei das Feld in der Anforderung ein Satz von einem oder mehreren Bits in einem Präfix gemäß einem Standard einer Expressverbindung für Peripheriekomponenten, PCIe-Standard, ist.

3. Einrichtung nach Anspruch 1, wobei die IOMMU-Schaltung (120), als Reaktion darauf, dass das Feld in der Anforderung gesetzt ist, geeignet ist, um eine Anzeige zu erzeugen, dass erlaubt ist, dass eine physische Adresse des geschützten Speichers der Vertrauensdomäne (206) einen privaten Schlüssel der Vertrauensdomäne (206) aufweist.

4. Einrichtung nach Anspruch 1, wobei die IOMMU-Schaltung (120), als Reaktion darauf, dass das Feld in der Anforderung gesetzt ist, geeignet ist, um eine Anzeige zu erzeugen, dass erlaubt ist, dass eine physische Adresse des geschützten Speichers der Vertrauensdomäne (206) einen gemeinsam genutzten Schlüssel der Vertrauensdomäne (206) und einer virtuellen Maschinenüberwachung (110B) der einen oder mehreren hardwareisolierten virtuellen Maschinen aufweist.

5. Einrichtung nach Anspruch 1, wobei die IOMMU-Schaltung (120), als Reaktion darauf, dass das Feld in der Anforderung nicht gesetzt ist, geeignet ist, um in einer Datenstruktur einer virtuellen Adresse auf physische Adresszuordnungen zuzugreifen, die durch die virtuelle Maschinenüberwachung (110B) verwaltet werden, aber nicht geeignet ist, um in der vertrauenswürdigen Datenstruktur der virtuellen Adresse auf physische Adresszuordnungen zuzugreifen, die durch den Vertrauensdomänenmanager (101) verwaltet werden.

6. Einrichtung nach einem der Ansprüche 1 bis 5, wobei es dem Vertrauensdomänenmanager (101) aber keiner virtuellen Maschinenüberwachung (10B) der einen oder der mehreren hardwareisolierten virtuellen Maschinen gestattet ist, eine Anzeige einer Außerkraftsetzung von einem oder mehreren Blöcken des geschützten Speichers der Vertrauensdomäne (206) in einer vertrauenswürdigen Außerkraftsetzungswarteschlange zu speichern.

7. Einrichtung nach einem der Ansprüche 1 bis 6, wobei die IOMMU-Schaltung (120) ein vertrauenswürdiges Stammtabellenzeigerregister umfasst, auf das der Vertrauensdomänenmanager (101) aber keine virtuelle Maschinenüberwachung (110B) der einen oder mehreren hardwareisolierten virtuellen Maschinen zugreifen kann.

8. Verfahren, umfassend:
Verwalten einer oder mehrerer hardwareisolierter virtueller Maschinen als eine jeweilige Vertrauensdomäne (206) mit einem Gebiet eines geschützten Speichers durch einen Vertrauensdomänenmanager (101) eines Hardwareprozessorkerns (102);
Senden einer Anforderung für einen direkten Speicherzugriff eines geschützten Speichers einer Vertrauensdomäne (206) von einer Eingabe/AusgabeVorrichtung an eine Schaltung einer Eingabe/Ausgabe-Speicherverwaltungseinheit, IOMMU-Schaltung, (120), die zwischen den Hardwareprozessorkern (102) und die Eingabe/Ausgabe-Vorrichtung (106) gekoppelt ist; und
Erlauben, durch die IOMMU-Schaltung (120), des direkten Speicherzugriffs als Reaktion darauf, dass ein Feld in der Anforderung gesetzt ist, um anzuzeigen, dass sich die Eingabe/Ausgabe-Vorrichtung in einer vertrauenswürdigen Computerbasis der Vertrauensdomäne befindet (206),
**gekennzeichnet durch**,
als Reaktion darauf, dass das Feld in der Anforderung gesetzt ist, Zugreifen, durch die IOMMU-Schaltung (120), in einer vertrauenswürdigen Datenstruktur einer virtuellen Adresse auf physische Adresszuordnungen, die von dem Vertrauensdomänenmanager (101), aber nicht durch eine virtuelle Maschinenüberwachung (110B) der einen oder der mehreren hardwareisolierten virtuellen Maschinen verwaltet werden.

9. Verfahren nach Anspruch 8, wobei das Feld in der Anforderung ein Satz von einem oder mehreren Bits in einem Präfix gemäß einem Standard einer Expressverbindung für Peripheriekomponenten, PCIe-Standard, ist.

10. Verfahren nach Anspruch 8, das ferner, als Reaktion darauf, dass das Feld in der Anforderung gesetzt ist, ein Erzeugen, durch die IOMMU-Schaltung (120), einer Anzeige umfasst, dass erlaubt ist, dass eine physische Adresse des geschützten Speichers der Vertrauensdomäne (206) einen privaten Schlüssel der Vertrauensdomäne (206) aufweist.

11. Verfahren nach Anspruch 8, das ferner, als Reaktion darauf, dass das Feld in der Anforderung gesetzt ist, ein Erzeugen, durch die IOMMU-Schaltung (120), einer Anzeige umfasst, dass erlaubt ist, dass eine physische Adresse des geschützten Speichers der Vertrauensdomäne (206) einen gemeinsam genutzten Schlüssel der Vertrauensdomäne (206) und einer virtuellen Maschinenüberwachung (110B) aufweist.

12. Verfahren nach Anspruch 8, das ferner, als Reaktion darauf, dass das Feld in der Anforderung nicht gesetzt ist, ein Zugreifen, durch die IOMMU-Schaltung (120), in einer Datenstruktur einer virtuellen Adresse auf physische Adresszuordnungen, die durch die virtuelle Maschinenüberwachung (110B) verwaltet werden, aber kein Zugreifen, durch den Eingabe/Ausgabe-Übersetzungspuffer, in der vertrauenswürdigen Datenstruktur der virtuellen Adresse auf physische Adresszuordnungen umfasst, die durch den Vertrauensdomänenmanager (101) verwaltet werden.

13. Verfahren nach einem der Ansprüche 8 bis 12, das ferner ein Gestatten für den Vertrauensdomänenmanager (101) aber nicht für eine virtuelle Maschinenüberwachung (110B) der einen oder der mehreren hardwareisolierten virtuellen Maschinen umfasst, eine Anzeige einer Außerkraftsetzung von einem oder mehreren Blöcken des privaten Speichers der Vertrauensdomäne (206) in einer vertrauenswürdigen Außerkraftsetzungswarteschlange zu speichern.

## Revendications

1. Appareil comprenant :
un cœur de processeur matériel (102) comprenant un gestionnaire de domaine de confiance (101) pour gérer une ou plusieurs machines virtuelles isolées matériellement en tant que domaine de confiance respectif doté d'une région de mémoire protégée ; et
des circuits d'unité de gestion de mémoire d'entrée/sortie (120), IOMMU, couplés entre le cœur de processeur matériel (102) et un dispositif d'entrée/sortie (106), où les circuits IOMMU (120) sont destinés, en réponse à une demande provenant du dispositif d'entrée/sortie (106) pour un accès direct à la mémoire d'une mémoire protégée d'un domaine de confiance (206), à permettre l'accès direct à la mémoire en réponse à un champ de la demande étant défini pour indiquer que le dispositif d'entrée/sortie (120) est dans une base informatique de confiance du domaine de confiance (206) ;
**caractérisé en ce que**
en réponse au champ de la demande étant défini, les circuits IOMMU (120) sont conçus pour accéder à une structure de données de confiance de correspondances entre adresses virtuelles et adresses physiques, gérée par le gestionnaire de domaine de confiance (101) et non par un moniteur de machine virtuelle (110B) des une ou plusieurs machines virtuelles isolées matériellement.

2. Appareil selon la revendication 1, dans lequel le champ dans la demande est un ensemble d'un ou plusieurs bits dans un préfixe selon une norme Peripheral Component Interconnect Express, PCIe.

3. Appareil selon la revendication 1, dans lequel, en réponse au champ dans la demande étant défini, les circuits IOMMU (120) sont conçus pour générer une indication qu'une adresse physique de la mémoire protégée du domaine de confiance (206) est autorisée à avoir une clé privée du domaine de confiance (206).

4. Appareil selon la revendication 1, dans lequel, en réponse au champ de la demande étant défini, les circuits IOMMU (120) sont conçus pour générer une indication qu'une adresse physique de la mémoire protégée du domaine de confiance (206) est autorisée à avoir une clé partagée du domaine de confiance (206) et un moniteur de machine virtuelle (110B) des une ou plusieurs machines virtuelles isolées matériellement.

5. Appareil selon la revendication 1, dans lequel, en réponse au fait que le champ de la demande n'est pas défini, les circuits IOMMU (120) sont conçus pour accéder à une structure de données de correspondances entre adresses virtuelles et adresses physiques gérée par le moniteur de machine virtuelle (110B) et ne pas accéder à la structure de données de confiance de correspondances entre adresses virtuelles et adresses physiques gérée par le gestionnaire de domaine de confiance (101).

6. Appareil selon l'une quelconque des revendications 1 à 5, dans lequel le gestionnaire de domaine de confiance (101), et non un moniteur de machine virtuelle (10B) des une ou plusieurs machines virtuelles isolées matériellement, est autorisé à provoquer le stockage d'une indication d'invalidation d'un ou plusieurs blocs de la mémoire protégée du domaine de confiance (206) dans une file d'attente d'invalidation de confiance.

7. Appareil selon l'une quelconque des revendications 1 à 6, dans lequel les circuits IOMMU (120) comprennent un registre de pointeur de table racine de confiance qui est accessible par le gestionnaire de domaine de confiance (101) et non par un moniteur de machine virtuelle (110B) des une ou plusieurs machines virtuelles isolées matériellement.

8. Procédé comprenant les étapes suivantes :
gérer une ou plusieurs machines virtuelles isolées matériellement comme un domaine de confiance (206) respectif avec une zone de mémoire protégée par un gestionnaire de domaine de confiance (101) d'un cœur de processeur matériel (102) ;
envoyer une demande d'accès direct à la mémoire d'une mémoire protégée d'un domaine de confiance (206) depuis un dispositif d'entrée/sortie vers des circuits d'unité de gestion de mémoire d'entrée/sortie, IOMMU, (120) couplés entre le cœur de processeur matériel (102) et le dispositif d'entrée/sortie (106) ; et
allouer, par les circuits IOMMU (120), l'accès direct à la mémoire en réponse à un champ de la demande étant défini pour indiquer que le dispositif d'entrée/sortie se trouve dans une base informatique de confiance du domaine de confiance (206)
**caractérisé en ce que**
en réponse au champ de la demande étant défini, accéder, par les circuits IOMMU (120), à une structure de données de confiance de correspondances entre adresses virtuelles et adresses physiques, gérée par le gestionnaire de domaine de confiance (101) et non par un moniteur de machine virtuelle (110B) des une ou plusieurs machines virtuelles isolées matériellement.

9. Procédé selon la revendication 8, dans lequel le champ dans la demande est un ensemble d'un ou plusieurs bits dans un préfixe selon une norme Peripheral Component Interconnect Express, PCIe.

10. Procédé selon la revendication 8, comprenant en outre, en réponse au champ de la demande étant défini, la génération, par les circuits IOMMU (120), d'une indication qu'une adresse physique de la mémoire protégée du domaine de confiance (206) est autorisée à avoir une clé privée du domaine de confiance (206).

11. Procédé selon la revendication 8, comprenant en outre, en réponse au champ de la demande étant défini, la génération, par les circuits IOMMU (120), d'une indication qu'une adresse physique de la mémoire protégée du domaine de confiance (206) est autorisée à avoir une clé partagée du domaine de confiance (206) et un moniteur de machine virtuelle (110B).

12. Procédé selon la revendication 8, comprenant en outre, en réponse au fait que le champ de la demande n'est pas défini, l'accès, par les circuits IOMMU (120), à une structure de données de correspondances entre adresses virtuelles et adresses physiques gérée par le moniteur de machine virtuelle (110B) et le non-accès, par le tampon de consultation de traduction d'entrée/sortie, à la structure de données de correspondances entre adresses virtuelles et adresses physiques de confiance gérée par le gestionnaire de domaine de confiance (101).

13. Procédé selon l'une quelconque des revendications 8 à 12, comprenant en outre de permettre au gestionnaire de domaine de confiance (101), et non à un moniteur de machine virtuelle (110B) des une ou plusieurs machines virtuelles isolées matériellement, de stocker une indication d'invalidation d'un ou plusieurs blocs de la mémoire privée du domaine de confiance (206) dans une file d'attente d'invalidation de confiance.
